# EUROPÄISCHE PATENTSCHRIFT

(11) **EP 3 494 076 B1**
(45) Veröffentlichungstag und Bekanntmachung des Hinweises auf die Patenterteilung: **07.12.2022**
(21) Anmeldenummer: 17751707.5
(22) Anmeldetag: 07.08.2017
(51) Int. Cl.: B65G 23/08, B65G 43/00, H02K 1/27, B65G 43/02, H02K 7/11, H02K 11/20, H02K 11/28, H02K 11/33

(54) **TROMMELMOTOR MIT FREQUENZUMRICHTER UND OPTIONALEM BANDSPANNUNGSSENSOR**
DRUM MOTOR WITH FREQUENCY CONVERTER AND OPTIONAL BELT TENSION SENSOR
MOTEUR À TAMBOUR AVEC CONVERTISSEUR DE FRÉQUENCE ET CAPTEUR DE TENSION DE BANDE FACULTATIF

(30) Priorität: 05.08.2016 DE 102016114524
(43) Veröffentlichungstag der Anmeldung: 12.06.2019
(73) Patentinhaber: Interroll Holding AG, 6592 Sant' Antonino (CH)
(72) Erfinder: HAMACHER, Stefan, 42929 Wermelskirchen (DE)
(74) Vertreter: Kohlhof, Stephan
(86) Internationale Anmeldenummer: PCT/EP2017/069977
(87) Internationale Veröffentlichungsnummer: WO 2018/024916

(56) Entgegenhaltungen:
- WO-A1-2010/142029
- WO-A1-2011/029120
- WO-A1-2012/094690
- WO-A2-2013/000006
- AT-A4- 508 662
- DE-A1- 19 811 130
- DE-A1-102006 004 421
- JP-A- S5 890 447
- JP-A- S6 015 308
- JP-A- S6 176 040
- JP-A- H05 236 612
- JP-A- S59 180 609
- JP-U- S5 741 821
- US-A1- 2005 083 188
- US-A1- 2014 326 582
- US-B1- 6 200 036

## Beschreibung

Die Erfindung betrifft einen Trommelmotor, umfassend ein Trommelrohr mit einem darin ausgebildeten Hohlraum und einer Längsachse, einem Schaft, der in der Längsachse verläuft und auf den das Trommelrohr mittels wenigstens eines Drehlagers gelagert ist, eine in dem Hohlraum des Trommelrohrs angeordnete elektrische Antriebseinheit, insbesondere eine Synchron- oder Asynchron-Antriebseinheit, die mit einem Stator und einem Rotor, welche in der Längsachse des Trommelrohrs angeordnet sind, wobei der Rotor, der entweder als Außenläufer oder als Innenläufer ausgeführt ist, mit dem Trommelrohr und der Stator mit dem Schaft verbunden ist, und umfassend eine Steuereinheit zum Steuern der Antriebseinheit.

Weitere Aspekte der Erfindung sind ein System, umfassend einen Trommelmotor der eingangs genannten Art, eine Rollenvorrichtung sowie einem Band, welches den Trommelmotor und die Rollenvorrichtung umschlingt.

Trommelmotoren der eingangs genannten Art werden für verschiedene Zwecke eingesetzt. Eine zentrale Anwendung solcher Trommelmotoren sind größere und kleinere Logistikeinheiten beziehungsweise Fördervorrichtungen, bei denen solche Trommelmotoren als Elemente von Streckenförderern gemeinsam mit Leerlaufrollen oder angetriebenen Rollen eingesetzt werden, die über Ketten, Riemen oder dergleichen von dem Trommelmotor angetrieben werden, in Rotation versetzt werden. Derartige Trommelmotoren können auch als motorbetriebene Förderrollen bezeichnet werden. Die Rollen sind dabei hintereinander angeordnet und bilden eine Förderstrecke. Ein Trommelmotor kann, wenn er als Antriebselement für Bandförderer dient und zu diesem Zweck eine höhere Leistungsklasse aufweist, gegebenenfalls eine Innenkühlung durch eine Flüssigkeit und eine höhere Belastungsstufe des Getriebes aufweisen, als Trommelmotoren oder motorbetriebene Förderrollen, die für andere Zwecke eingesetzt werden.

Trommelmotoren der eingangs beschriebenen Art bestehen grundsätzlich aus einer elektrischen Antriebseinheit im Innenraum des Trommelrohrs, die das Trommelrohr gegenüber einem Schaft, der als Achse dient, in Rotation versetzt. Der Schaft wird hierbei typischerweise ortsfest in einem Gestell drehmomentenfest gehalten. Er kann durchgehend sein, oder zweiteilig, sodass er zwei axial aus dem Trommelrohr herausragende Achsstummel bildet.

Bei Trommelmotoren, die mit einer elektrischen Synchron-Antriebseinheit, also einem Synchron-Elektromotor bzw. einem Synchron-Motor angetrieben werden, besteht zudem das Problem der Drehzahlregelung. Synchron-Motoren lassen sich gut als Stellmotoren einsetzen, aufgrund des Rastmoments und der Positionierung durch die geometrisch festgelegten Permanentmagnete, allerdings müssen Synchron-Motoren mit einem Frequenz-Umrichter betrieben werden, um einen Anlauf des Synchron-Motors zu ermöglichen. Bisherige Trommelmotoren mit Synchron-Maschinen waren daher im Einsatz begrenzt, und es war für Betreiber von Förderanlagen mit Synchron-Motoren erforderlich, Frequenz-Umrichter an einer entsprechenden zentralen Energieversorgung der Trommelmotoren vorzusehen.

Bei Trommelmotoren, die mit einer elektrischen Asynchron-Antriebseinheit, also einem Asynchron-Elektromotor bzw. einem Asynchron-Motor angetrieben werden, besteht zudem das Problem der Drehzahlregelung, wenn die Antriebseinheit in der Drehzahl variiert werden soll. Asynchron-Motoren können in Stern- oder Dreieckschaltung betrieben werden, aber nach dem Anlauf des Motors stellt sich eine Drehzahl ein, die abhängig von der Netzfrequenz und der Polanzahl des Motors ist. Eine Drehzahlanpassung erfolgt in der Regel durch ein Getriebe, das zwischen dem Motorläufer und dem äußeren Trommelrohr angeordnet ist. Wenn die Drehzahl im Betrieb variiert werden soll, muss auch eine Asynchron-Antriebseinheit mit einem Frequenz-Umrichter betrieben werden. Bisherige Trommelmotoren mit Asynchron-Maschinen waren daher im Einsatz begrenzt, und es war für Betreiber von Förderanlagen mit Asynchron-Motoren erforderlich, Frequenz-Umrichter an einer entsprechenden zentralen Energieversorgung der Trommelmotoren vorzusehen, wenn die Drehzahl im Betrieb variiert werden sollte.

Trommelmotoren für den genannten Einsatzzweck sind Produkte, die verschiedenen hohen Anforderungen unterliegen. Gefordert ist eine hohe Laufruhe, um den Geräuschpegel in Fördervorrichtungen, die typischerweise mehrere solcher Trommelmotoren aufweisen, gering zu halten. Gefordert ist weiterhin ein kostengünstiges Fertigungsverfahren, denn es handelt sich um Produkte, die in hoher Stückzahl eingesetzt werden. Weiterhin ist die Lebensdauer solcher Trommelmotoren ein wichtiger Faktor. Trommelmotoren werden typischerweise in vorbestimmten Intervallen, die sich an der Anzahl der Rotationen sowie der Belastung des entsprechenden Trommelmotors orientieren, gewartet. Wird ein Trommelmotor nicht gewartet, oder fällt er aufgrund anderer Überlastungen aus, kommt es zum Stillstand der Transportanlagen, was zu Produktions- und Lieferverzögerungen führt. Der Ausfall eines Trommelmotors kann also mitunter große Nachteile und Folgeschäden nach sich ziehen. Daher ist es erforderlich, eine Überbelastung des Trommelmotors möglichst zu vermeiden und eine hohe Lebensdauer zu erreichen.

Um einen Ausfall des Trommelmotors zu vermeiden, ist es daher beispielsweise aus DE 10 2006 033 821 bekannt, durch geeignete Erfassungsmittel einen festgebremsten Zustand des Trommelmotors zu erkennen und entsprechend die für den Trommelmotor zum Betrieb notwendige Energie zu drosseln. Hierdurch wird vermieden, dass der Trommelmotor beim festgebremsten Zustand weiter betrieben wird und hierdurch Schaden nimmt.

Weiterhin ist aus DE 42 30 729 ein Trommelmotor bekannt, bei dem im Inneren eine Kupplung vorgesehen ist, die entsprechend einer Drehmomentstütze ausgebildet ist und mit einem Schaltglied ausgestattet ist, sodass bei einem Drehmoment, welches ein Schwellwertdrehmoment übersteigt, eine automatische Abschaltung des Trommelmotors erfolgt. Der in DE 4 230 729 offenbarte Motor dient als Antrieb für Rollläden, Rolltore, Markisen und dergleichen.

Weiterhin ist aus WO 02/098768 ein Trommelmotor mit einer integrierten Sensorik bekannt. Die integrierte Sensorik kann beispielsweise einen induktiven Sensor, einen kapazitiven Sensor, einen optischen Sensor, einen Vibrationssensor, einen Piezosensor, einen Mikrowellensender oder einen Radarsender aufweisen. Insgesamt dient die integrierte Sensorik dazu, die mittels des Trommelmotors geförderten Fördergüter zu erfassen und Transportwege zu vermessen.

Außerdem offenbart WO 2010/142029 ein System zum Überwachen einer Vielzahl von Trommelmotoren in einer Förderanlage. Dazu werden eine Mehrzahl an Rollenmonitoren für jede Rolle sowie ein entfernter Monitor zur Überwachung von einem entfernten Standpunkt eingesetzt. Mittels der Monitore wird der Strom, der von den Trommelmotoren aufgenommen wird, überwacht und mit einem Prozessor verarbeitet. Die Übertragung zwischen den Rollenmonitoren und dem entfernten Monitor erfolgt über eine Ad-hoc-Drahtlosverbindung. WO 2013/000006A2 offenbart einen Trommelmotor nach dem Oberbegriff des Anspruchs 1.

Auch wenn die erwähnten Systeme grundsätzlich gut funktionieren, ist dennoch weiterer Verbesserungsbedarf vorhanden. Insbesondere ist es eine Aufgabe der vorliegenden Erfindung, einen Trommelmotor der eingangs genannten Art anzugeben, bei dem die Lebensdauer verlängert ist und/oder ein Ausfall des Trommelmotors aufgrund von Überbelastung vermieden werden kann und dessen Einsatz für einen Betreiber vereinfacht ist. Ein Problem, das insofern bei Trommelmotoren besteht ist, dass eine nach außen führende Verkabelung beschädigt wird. Im Logistikbereich ist eine Vielzahl bewegter Güter und Fördereinheiten vorhanden. Bei einer Kollision mit einem Kabel das zur Versorgung des Trommelmotors dient, kann dieses leicht beschädigt werden, was dann einen Ausfall des Trommelmotors nach sich zieht und im schlimmsten Fall zu einem Stillstand der Förderanlage führt. Ein weiteres Problem sind bei langen Kabeln auch Ableitströme und Funkstörungen.

In einem ersten Aspekt löst die Erfindung die Aufgabe mit einem Trommelmotor nach Anspruch 1.

Erfindungsgemäß ist vorgesehen, dass die Steuereinheit, die einen Frequenzumrichter für den Antrieb, insbesondere einen Synchron-Antrieb oder Asynchron Antrieb, des Trommelmotors aufweist, direkt an dem Schaft des Trommelmotors befestigt ist. Hierdurch ist es möglich, den Frequenzumrichter in großer räumlicher Nähe und direkt benachbart zum entsprechend um den Trommelmotor geführten Band, vorzusehen. Ein Bediener erkennt somit unmittelbar, dass der Trommelmotor mit Frequenzumrichtern betrieben wird unabhängig davon, ob es sich um eine Synchron-Maschine oder Asynchron- Maschine handelt. Ferner erkennt der Bediener unmittelbar, wie ein derartiger Trommelmotor anzusteuern, zu handhaben und zu warten ist. Der Frequenzumrichter ist auf die Art der Antriebseinheit des Trommelmotors abgestimmt und die Antriebseinheit wird zusammen mit dem Frequenzumrichter als Einheit vorgesehen, parametrisiert und vertrieben. Es ist für einen Bediener nun nicht mehr notwendig, separate Frequenzumrichter zu beschaffen, einzubauen und diese zu parametrisieren. Hierdurch ist auch Fehlbedienung weitgehend vermieden. Da die Steuereinheit mit dem Frequenzumrichter unmittelbar auf dem Schaft befestigt ist, wird verhindert, dass ein Bediener die Synchron-Antriebseinheit ohne Frequenzumrichter an das normale Netz (Wechselspannungsnetz oder Drehstromnetz) anschließt und somit eine Überhitzung und Beschädigung der Synchron-Antriebseinheit verursacht.

Erfindungsgemäß ist die Steuereinheit außerhalb des Trommelrohrs an dem Schaft befestigt. Der Schaft wird üblicherweise beidseitig vom Trommelrohr in entsprechenden Aufnahmen gehalten, die an einem Gestell vorgesehen sind. Der Schaft kann durchgängig oder mehrteilig sein, das heißt er kann sich als ein Stück durch den gesamten Trommelmotor erstrecken, oder der Schaft erstreckt sich auf beiden Seiten aus dem Trommelrohr heraus und bildet Achsstummel. Diese Achsstummel erstrecken sich vorzugsweise axial nach außen an den entsprechenden Aufnahmen an einem Gestell zur Aufnahme des Trommelmotors, und gemäß dieser Variante ist die Steuereinheit an einem derartigen axialen Ende, welches axial äußerlich der entsprechenden Schaftaufnahmen vorsteht, befestigt. Die Stromversorgung der Antriebseinheit wird bevorzugt über ein Kabel bereitgestellt, welches in einem Hohlraum durch den Schaft verläuft. Der Schaft ist folglich wenigstens an der Seite, an der die Steuereinheit angeordnet ist, als Hohlschaft ausgebildet. Somit existiert keine äußerlich verlaufende Verkabelung und Trommelrohr, Schaft, Antriebseinheit sowie Steuereinheit bilden eine einzige Baueinheit, die als ein Bauteil in dem entsprechenden Gestell montierbar ist. Hierdurch ist die Verwendung des Trommelmotors wesentlich vereinfacht.

In einer zweiten Variante ist die Steuereinheit innerhalb des Hohlraums des Trommelrohrs aufgenommen und an dem Schaft befestigt. Hierdurch ist die Kompaktheit des Trommelmotors weiter verbessert. Die Steuereinheit samt Frequenzumrichter ist in dem Trommelrohr aufgenommen, eine Stromversorgung kann wiederum mittels eines durch den Schaft geführten Kabels erfolgen. Das Kabel kann dann von außerhalb des Gestells durch den Schaft bis ins Innere des Trommelrohrs, und dort an die Steuereinheit und den Frequenzumrichter angeschlossen sein. Sofern der Trommelmotor als ölgekühlter Trommelmotor ausgebildet ist, ist es in dieser Variante wichtig, dass die Steuereinheit samt Frequenzumrichter gegen das Öl gekapselt in dem Trommelrohr untergebracht ist. Beispielsweise kann dazu ein Gehäuse vorgesehen sein, oder ein trockener gekapselter Bereich innerhalb des Trommelrohrs. Bei trockenlaufenden Trommelmotoren besteht hier kein größeres Problem. Besonders bevorzugt wird der Frequenzumrichter in einem axial separierten Gehäuse derart in dem Trommelrohr angeordnet und insbesondere eine Lüftung oder Kühlrippen vorgesehen, um einen Hitzetransport von dem Frequenzumrichter nach außerhalb des Trommelrohrs zu gewährleisten und die Antriebseinheit und den Frequenzumrichter weitestgehend von gegenseitiger thermischen Beeinflussung zu entkoppeln.

In einer besonders bevorzugten Ausführungsform weist die Steuereinheit einen Controller, insbesondere eine speicherprogrammierbare Steuerung zum Erfassen von Betriebsdaten des Trommelmotors auf. Die speicherprogrammierbare Steuerung (SPS) kann auch dazu verwendet werden, bestimmte Stellsignale an die Synchron-Antriebseinheit zu senden, um so beispielsweise beim Konfektionieren von Waren eine entsprechende Stellung eines Transportbands zu erreichen.

Vorzugsweise dient die SPS dazu, wenigstens einen der folgenden Parameter zu bestimmen: Drehzahl des Rotors, Temperatur von Motorwindungen, Net-Nennstromaufnahme, Trommelumdrehungen bis zum nächsten fälligen Service, Restlaufzeit bis zum nächsten fälligen Service. Der "nächste fällige Service" ist vorzugsweise durch eine vorbestimmte Schwellwertanzahl an Umdrehungen und/oder durch eine vorbestimmte Schwellwertbetriebsdauer definiert. Sofern wenigstens eines von beiden, die Schwellwertumdrehungsanzahl oder die Schwellwertbetriebsstundenanzahl erreicht ist, ist der nächste Service fällig. Bei einer Synchron-Antriebseinheit lässt sich die Drehzahl, aufgrund der definierten Rotation zwischen Rotor und Stator, bei der kein Schlupf vorgesehen ist, mittels der SPS aus dem Frequenzumrichter auslesen. Ist gleichzeitig in der SPS die Schwellwertdrehzahl eingespeichert, kann die Restanzahl an Umdrehungen ausgegeben werden. Gleiches gilt für die Betriebsstunden. Ferner ist es möglich, aus den bisherigen Umdrehungen pro Betriebsstunde und den durchschnittlichen Betriebsstunden pro Tag einen approximativen Wert für die Zeitdauer bis zum nächsten fälligen Service zu bestimmen. Dies wird vorzugsweise durch die SPS ausgeführt. Dazu ist ein entsprechender Computerprogrammcode in der SPS beziehungsweise dem Controller vorgesehen.

Weiterhin ist bevorzugt, dass die Steuereinheit eine Kommunikationseinheit zum drahtlosen oder drahtgebundenen Übertragen von wenigstens einem Signal aufweist. Bevorzugt werden auch die genannten Parameter, separat oder gemeinsam übertragen. Beispielsweise wird Schwellwertdrehzahl ein entsprechendes Signal drahtlos an einen Kontrollstand in einer Lagerhalle oder an ein mobiles Gerät wie z.B. ein Laptop, Smartphone o.ä. gesendet, sodass ein Mitarbeiter erkennt, welcher Trommelmotor einem Service zu unterziehen ist. Gleiches gilt beispielsweise für die Nennstromaufnahme. Hierdurch ist eine Fehleridentifikation wesentlich vereinfacht und der Mitarbeiter erkennt sofort, an welcher Stelle Bedarf für Gegenmaßnahmen besteht. Es ist auch denkbar, diese Informationen über das Internet an den Hersteller des Trommelmotors zu senden, um so besondere Wartungen vornehmen zu können. Für eine drahtlose Kommunikation bietet sich insbesondere eine Kommunikation über den Bluetooth^{®}-Standard an, als auch über ein Drahtlosnetzwerk, wie insbesondere Wifi.

Weiter ist bevorzugt, dass die Steuereinheit ein Display zum Anzeigen von wenigstens einer den Trommelmotor betreffenden Information aufweist. Hierzu bietet sich beispielsweise ein Digitaldisplay an, welches die noch Rest-Umdrehungen bis zum nächsten Service anzeigt, oder auch die vorausbestimmte, geschätzte Zeitdauer bis zum nächsten Service, insbesondere bis zum nächsten geplanten Service oder Stillstand der Anlage in der der Trommelmotor betrieben wird, bei einer durchschnittlichen Belastung, wie sie beispielsweise in den vergangenen fünf Arbeitstagen, zehn Arbeitstagen oder dergleichen auftrat. Auch weitere Informationen, wie allgemein die Temperatur oder die aktuelle Umdrehungszahl, Nennstromaufnahme und dergleichen können angezeigt werden.

Mit einem im oder am Trommelmotor verbauten sensorlos Vektor geregeltem Frequenzumrichter ist es auch möglich, ein digitales Encodersignal zu generieren, welches in einer übergeordneten Steuerung, z.B. zum Tracking eines auf dem Förderband liegenden Produktes verwendet werden kann. Durch das vom Frequenzumrichter sensorlos ermittelte Signal kann ein teurer und empfindlicher Encoder ersetzt werden. Dies bietet wiederum mehr Betriebssicherheit, da die sensiblen elektronischen Encoder häufig ausfallen und dann der Trommelmotor aufwendig repariert werden muss.

In einer weiteren bevorzugten Ausführungsform ist vorgesehen, dass der Trommelmotor eine Detektionseinrichtung mit einer Kraftmesseinrichtung zum Bestimmen einer im Wesentlichen senkrecht auf die Längsachse wirkenden und an dem Trommelrohr angreifenden Kraft aufweist. Die Kraft, beziehungsweise ein die Kraft repräsentierender Vektor, bildet gemeinsam mit der Längsachse des Trommelrohrs eine Ebene. Die Kraft wirkt im Wesentlichen senkrecht auf die Oberfläche des Trommelrohrs. Auf diese Weise lässt sich bevorzugt eine Kraft, die aufgrund einer Bandspannung auf den Trommelmotor wirkt, bestimmen. Ist der Trommelmotor in einem System eingebaut, verläuft in der Regel ein Band, das den Trommelmotor teilweise umschlingt und so eine Zugkraft auf den Trommelmotor aufbringt, wobei die Zugkraft im Wesentlichen senkrecht auf die Längsachse einwirkt und an dem Trommelrohr angreift. Mittels der erfindungsgemäßen Detektionseinrichtung, die eine Kraftmesseinheit aufweist, ist diese Kraft diskret oder kontinuierlich bestimmbar.

Es soll verstanden werden, dass eine derartige Detektionseinrichtung auch bei Trommelmotoren mit Asynchron-Antrieben eingesetzt werden kann und daher separater Schutz für diesen Aspekt, unabhängig von der vorstehend beschriebenen Steuereinheit mit Frequenzumrichter beansprucht werden kann.

Es hat sich gezeigt, dass insbesondere die Belastung aufgrund einer Bandspannung zu Verschleiß an dem Trommelmotor führt. Wird auf einem Band, welches um einen Trommelmotor gespannt ist, eine große Last transportiert, wirkt eine hohe Kraft auf das Drehlager des Trommelmotors und dieses droht frühzeitig zu verschleißen. Zusätzlich droht bei hoher Belastung ein Ölaustritt, der nicht nur in der Lebensmittelindustrie für negative Auswirkungen sorgen kann. Ist diese, insbesondere aufgrund der Bandspannung, im Wesentlichen senkrecht auf die Längsachse wirkende und am Trommelrohr angreifende Kraft bekannt, ist es möglich, Serviceintervalle entsprechend zu wählen und den Trommelmotor rechtzeitig zu warten, bevor dieser Schaden nimmt.

Der Rotor der Antriebseinheit kann den Stator radial äußerlich umgeben, also als Außenläufer ausgebildet sein. Alternativ ist es auch möglich, den Rotor als Innenläufer auszubilden und beispielsweise über ein Getriebe mit dem Trommelrohr zu koppeln. In einem solchen Fall bietet es sich an, den Schaft nicht durchgängig zu bilden, sondern zwei Schäfte vorzusehen, die als Achsstummel dienen. Die Steuereinheit dient zum Steuern der Antriebseinheit und versorgt die Antriebseinheit mit elektrischer Energie. Die Steuereinheit kann bei größeren Anlagen als zentrale Steuereinheit ausgebildet sein, die sämtliche Trommelmotoren der Anlage steuert. Alternativ ist der Trommelmotor mit einer eigenen, separaten Steuereinheit ausgestattet, die entsprechend den Förderungsanforderungen den Trommelmotor mit Energie versorgt. In der Regel weist dieser einen Chip auf, der das Ein- bzw. Ausschalten einer Stromzuführung regelt.

Gemäß einer ersten bevorzugten Ausführungsform, weist die Kraftmesseinheit wenigstens einen Sensor und eine Auswerteeinheit auf, wobei die Auswerteeinheit dazu eingerichtet ist, auf Basis von einem vom Sensor empfangenen Signal die Kraft zu bestimmen und wenn die bestimmte Kraft einen vorgegebenen Schwellwert übersteigt, ein Überlastsignal abzugeben. Dazu ist der Schwellwert vorzugsweise im Speicher in der Auswerteeinheit gespeichert. Die Auswerteeinheit ist dazu eingerichtet, eine Vergleichsoperation durchzuführen, in der die bestimmte Kraft mit dem vorgegebenen gespeicherten Schwellwert verglichen wird. Wird in dieser Vergleichsoperation festgestellt, dass die bestimmte Kraft den vorgegebenen Schwellwert übersteigt, wird von der Auswerteeinheit ein bestimmtes Überlastsignal ausgegeben. Bevorzugt wird das Überlastsignal an die Steuereinheit ausgegeben. Alternativ wird das Überlastsignal an eine andere externe Einheit ausgegeben. In einer bevorzugten Variante ist vorgesehen, dass der Trommelmotor ferner eine Warnleuchte aufweist, und das Überlastsignal an die Warnleuchte ausgegeben wird, sodass beispielsweise bei Überlast ein rotes Licht aufleuchtet. Hierdurch ist es für einen Bediener einfach zu erkennen, ob ein Trommelmotor überlastet ist und entsprechende Gegenmaßnahmen können eingeleitet werden. Eine Überlastung des Trommelmotors führt in der Regel zu einem erhöhten Verschleiß und damit zu einer stark abnehmenden Lebensdauer, sodass hierdurch die Lebensdauer des Trommelmotors wesentlich erhöht wird. Das Überlastsignal kann zudem in bevorzugter Weise akustisch ausgegeben werden. Der Schwellwert ist vorzugsweise einstellbar, oder wird werksseitige bei der Installation der Anlage eingespeichert. Der Schwellwert ist abhängig von der Art des Trommelmotors, von akzeptablen Serviceintervallzeiten, den üblichen Belastungen im Betrieb einer Anlage sowie von der Bauweise der Drehlager und des Trommelmotors. Zudem ist es denkbar, dass der Schwellwert abhängig ist von der Temperatur, insbesondere, wenn diese Einfluss auf eine Viskosität eines Schmierstoffs in den Drehlagern hat, sodass vorgesehen sein kann, dass der Schwellwert mit der Temperatur angepasst wird.

In einer weiteren bevorzugten Ausführungsform ist vorgesehen, dass die Auswerteeinheit das Überlastsignal an die Steuereinheit sendet und die Steuereinheit dazu eingerichtet ist, den Trommelmotor bei Empfang des Überlastsignals zu verlangsamen. Bevorzugt wird der Trommelmotor bei Empfang des Überlastsignals vollständig angehalten. Hierdurch wird verhindert, dass sich der Trommelmotor bei Überlastung weiter dreht und so übermäßig verschleißt. Stattdessen wird der Trommelmotor bei Überlast angehalten und ein Bediener kann die Belastung des Trommelmotors ändern, beispielsweise durch manuelle Verlagerung eines zu transportierenden Gegenstands oder andere geeignete Maßnahmen. Dazu sendet die Steuereinheit vorzugsweise ein entsprechendes Signal an den Chip, der die Stromzufuhr zu der Antriebseinheit steuert.

In einer bevorzugten Weiterentwicklung des Trommelmotors ist vorgesehen, dass der Schaft an wenigstens einem axialen Ende des Trommelrohrs in einer Schaftaufnahme zum Abstützen des Trommelmotors aufgenommen ist. Vorzugsweise ist auf beiden Seiten eine derartige Schaftaufnahme vorgesehen, um den Trommelmotor entsprechend gleichmäßig abzustützen.

In einer bevorzugten Weiterbildung der Erfindung ist die Kraftmesseinheit dazu eingerichtet, eine von dem Schaft auf die Schaftaufnahme wirkende Kraft zu bestimmen. Diese Kraft ist die Kraft, die im Wesentlichen senkrecht auf die Längsachse des Trommelmotors wirkt, da diese unmittelbar auch auf die Schaftaufnahme wirkt. Durch die Bestimmung der Kraft, die auf die Schaftaufnahme wirkt, ist es möglich, die im Wesentlichen senkrecht auf die Längsachse und einem Trommelrohr angreifende Kraft zu bestimmen. Hierzu kann in einer einfachen Variante ein flächiger Kraftsensor wie ein Dehnmessstreifen vorgesehen sein.

Bevorzugt ist die Detektionseinrichtung mittels eines Gehäuses auf der dem Trommelrohr abgewandten Seite der Schaftaufnahme angeordnet. Der Schaft erstreckt sich bevorzugt durch die Schaftaufnahme hindurch bis in das Gehäuse der Detektionseinrichtung hinein. Die Detektionseinrichtung ist vorzugsweise mittels des Gehäuses fest mit der Schaftaufnahme verbunden, beispielsweise an dieser angeflanscht. Das Gehäuse dient nicht nur zum Halten der Detektionseinrichtung, sondern auch zum Abschotten der Detektionseinrichtung gegen Umwelteinflüsse, wie insbesondere Öl oder Wasser. Es ist wichtig, dass die Detektionseinrichtung gegen solche Einflüsse geschützt ist, da sie elektronische Bauteile enthält.

Die Detektionseinrichtung mittels eines Gehäuses auf der dem Trommelrohr abgewandten Seite der Schaftaufnahme anzuordnen hat ferner den Vorteil, dass die Detektionseinrichtung leicht von außen zugänglich ist, beispielsweise für Einstellungen, aber auch auf einfache Art und Weise mit einer Stromversorgung und anderen Peripheriegeräten koppelbar ist.

In einer bevorzugten Variante ist die Detektionseinrichtung innerhalb des Hohlraums des Trommelrohrs angeordnet. Auch in dieser Variante ist die Detektionseinrichtung bevorzugt mit einer Verschalung, beispielsweise einem Gehäuse, ausgestattet. Alternativ ist die Detektionseinrichtung in einem abgeschotteten Bereich innerhalb des Trommelrohrs angeordnet, sodass sie nicht in Kontakt mit Öl oder dergleichen kommt, oder mit anderen Stoffen, die mittels des Trommelmotors transportiert werden. Auch hierdurch wird die Lebensdauer des Trommelmotors erhöht.

In einer Ausgestaltung der Erfindung ist der Schaft gegen eine oder mehrere Federn verschieblich in der Schaftaufnahme gelagert und die Kraftmesseinheit ist dazu eingerichtet, die Kraft basierend auf einer Verschiebung des Schafts zu bestimmen. Die Feder ist bevorzugt als Druckfeder ausgebildet. Die Feder weist eine Federkonstante C auf und die von dem Schaft auf die Schaftaufnahme wirkende Kraft ist proportional zu dem Weg, um den der Schaft verschoben wird. Dies ergibt sich aus dem Federgesetz F = C . X, wobei C die Federkonstante und X der Verschiebungsweg ist. Die Schaftaufnahme weist dazu vorzugsweise ein Langloch zur Aufnahme des Schafts auf, wobei das Langloch mit seiner Längsachse parallel zu der Wirkungsrichtung der zu bestimmenden Kraft ausgerichtet ist. Alternativ ist das Ende des Schafts in einem separaten Element drehfest gehalten, welches seinerseits verschieblich in der Schaftaufnahme gehalten ist. Ist die Kraft, die zu bestimmen ist, diejenige, die durch eine Bandspannung hervorgerufen wird, ist das Langloch in der Schaftaufnahme vorzugsweise horizontal ausgerichtet. Das Langloch kann zu einer oder beiden Seiten hin offen sein, wobei wenigstens ein Anschlag für die Schaftaufnahme vorgesehen ist, wenn diese in Ruheposition steht. Bevorzugt ist diese Variante, das in beiden Schaftaufnahmen eine solche Verschieblichkeit möglich ist, sodass der Trommelmotor stets ausgerichtet verschoben wird und nicht um eine Achse, die senkrecht auf die durch die Längsachse des Trommelmotors und die zu bestimmende Kraft aufgespannte Ebene ist, verdrillt wird. Eine Verdrillung des Trommelmotors um seine Längsachse führt dazu, dass das diesen umschließende Band nicht mehr gleichmäßig läuft, was ebenfalls nachteilig für die Lebensdauer sein kann. Daher ist eine gleichmäßige Verschiebung des Trommelmotors bevorzugt, um so den Gleichlauf des Bandes sicherzustellen.

In einer ersten bevorzugten Variante ist dabei der Sensor als Kontaktschalter ausgebildet und bei Kontakt zwischen dem Kontaktschalter und dem Schaft oder einem mit dem Schaft gekoppelten Zwischenelement, wie ein Schafthalteteil, wird das Überlastsignal ausgegeben. Der Kontaktschalter ist derart lokal in der Detektionseinrichtung angeordnet, dass der Weg zwischen einer Ruheposition des Schafts und des Kontaktschalters multipliziert mit der Federkonstanten der Schwellwertkraft entspricht. Der Kontaktschalter ist in diesem Sinne als ein Endschalter ausgebildet. Wird ein Kontakt zwischen dem Schaft bzw. einem Zwischenelement und dem Kontaktschalter erfasst, gibt der Kontaktschalter ein Überlastsignal aus. Es kann auch vorgesehen sein, dass der Kontaktschalter einen Stromkontakt herstellt, oder unterbricht. Es ist ebenso denkbar, dass zwischen Kontaktschalter und Schaft weitere Übertragungsmittel vorgesehen sind, wie beispielsweise ein Hebel, ein Schafthalteteil oder dergleichen, sodass es nicht erforderlich ist, dass der Kontaktschalter unmittelbar mit dem Schaft in Kontakt kommt. Vielmehr reicht ein mittelbarer Kontakt aus. Bevorzugt ist, sofern zwei Schaftaufnahmen vorgesehen sind, ebenso zwei Kontaktschalter vorgesehen. In diesem Fall würde es ausreichen, wenn einer der beiden Kontaktschalter durch den Schaft kontaktiert wird, um das Überlastsignal auszugeben.

Eine demgegenüber verbesserte Variante besteht darin, dass der Sensor einen Encoder und einen Maßstab umfasst, wobei der Encoder dazu eingerichtet ist, ein einer Relativverschiebung zwischen Encoder und Maßstab entsprechendes Signal auszugeben. Der Maßstab ist vorzugsweise an dem Schaft angeordnet und der Encoder ist ortsfest in der Detektionseinrichtung angeordnet. In diesem Fall wird der Maßstab relativ zum Encoder verschoben. Der Maßstab kann beispielsweise einen Strichcode oder dergleichen aufweisen und der Encoder ein optischer Encoder sein. Ebenso ist es denkbar, dass der Maßstab einen magnetisierten Maßstab umfasst und der Encoder einen magnetischen Detektor aufweist. Encoder und Maßstab sind bekannte Wegmessmittel und hier sind ebenso weitere Varianten denkbar. Diese Variante hat den Vorteil, dass der Weg kontinuierlich gemessen werden kann und damit auch die Schwellwertkraft frei programmiert werden kann, indem ab einem bestimmten Weg, also ab einer vorbestimmten Relativverschiebung zwischen Encoder und Maßstab, von dem Encoder das Überlastsignal ausgegeben wird. In dieser Variante ist der Trommelmotor gemäß der vorliegenden Erfindung einfach an verschiedene Einsatzumgebungen und Rahmenbedingungen anpassbar und damit ist der Einsatz flexibel möglich.

In einer weiteren bevorzugten Variante umfasst der Sensor ein Potentiometer, welches dazu eingerichtet ist, ein zu einer Verschiebung des Schafts proportionales elektrisches Signal auszugeben. Ein Potentiometer ist ein einfaches und robustes Bauteil, welches sich auf vorteilhafte Weise in den Trommelmotoren der vorliegenden Art einbauen lässt. Ein Potentiometer gibt ein elektrisches Signal aus, welches mit einer Verschiebung übereinstimmt und die Auswerteeinheit vergleicht dieses Signal mit einem vorgegebenen Schwellwertsignal, welches frei programmierbar ist. Das vorgegebene Schwellwertsignal entspricht dann der vorgegebenen Schwellwertkraft, da das vom Potentiometer abgegebene Signal proportional zum Weg ist. Der Weg ist, wie bereits erwähnt, proportional zur Kraft, die senkrecht auf die Längsachse des Trommelrohrs wirkt und am Trommelrohr angreift. Auch in dieser Variante ist die Schwellwertkraft frei vorgebbar und der Trommelmotor so in verschiedenen Anwendungsfällen flexibel einsetzbar. Bevorzugt ist der Sensor in den vorherigen Ausführungsformen so ausgebildet, dass nicht nur ein einzelnes Überlastsignal ausgegeben werden kann, sondern auch ein Vor-Überlastsignal. Das heißt, ein Überlastsignal, welches noch kein Abschalten, bzw. Verlangsamen des Antriebs nach sich zieht, sondern eine Vorwarnstufe, wenn Überlast droht. In einem solchen Fall ist es denkbar, eine gelbe Leuchte zu verwenden oder nur ein akustisches Signal auszugeben. Dies kann beispielsweise durch einen zweiten Kontaktschalter, der bezogen auf den Weg vor dem Kontaktschalter liegt, der das Überlastsignal auslöst gelöst werden. Bei den Ausführungsformen mit Encoder bzw. Potentiometer kann dies programmtechnisch gelöst werden.

Gemäß einer weiteren bevorzugten Ausführungsform ist die Detektionseinrichtung ferner dazu eingerichtet, wenigstens einen der folgenden Parameter zu bestimmen: Drehzahl des Rotors, Temperatur von Motorwindungen, Nennstromaufnahme, Trommelumdrehungen bis zum nächsten fälligen Service, Anzahl der ausgegebenen Ballastsignale, Datum der Ausgabe des Überlastsignals. Insbesondere die Drehzahl des Rotors, die Temperatur von Motorwindungen sowie die Anzahl der ausgegebenen Überlastsignale können auch zur Bestimmung eines Servicezeitraums bis zum nächsten Service verwendet werden. Bei einer hohen Drehzahl und einer hohen Anzahl von ausgegebenen Überlastsignalen ist es wahrscheinlich, dass der Verschleiß relativ hoch ist und der nächste fällige Service bald durchzuführen ist. Üblicherweise ist vorgegeben, wie viel Trommelumdrehungen bis zum nächsten Service fällig sind, sodass es vorteilhaft ist, wenn die Detektionseinrichtung die Trommelumdrehungen zählt und somit auch die noch verbliebenen Trommelumdrehungen bis zum nächsten fälligen Service erfasst. Bevorzugt wird auch das Datum, bzw. die Daten, an denen ein Überlastsignal ausgegeben wurde, von der Detektionseinrichtung erfasst. Dafür weist die Detektionseinrichtung oder die Steuereinheit vorzugsweise einen Datumszähler auf, der durch einen Servicemitarbeiter einstellbar ist. So ist es möglich, im Nachhinein nachzuvollziehen, an welchen Tagen und wie oft, ein Überlastsignal ausgegeben wurde. Für die Parameter Drehzahl des Rotors, Temperatur von Motorwindungen, Nennstromaufnahme, sind bevorzugt separate Sensoren vorgesehen, wie sie im Stand der Technik grundsätzlich bekannt sind.

Weiterhin ist bevorzugt, dass die Kommunikationseinheit zum drahtlosen oder drahtgebundenen Übertragen von wenigstens einem Signal, welches die bestimmte Kraft repräsentiert, vorgesehen ist. Beispielsweise wird bei Ausgabe des Überlastsignals ein entsprechendes Signal drahtlos an einen Kontrollstand in einer Lagerhalle gesendet, sodass ein Mitarbeiter erkennt, an welcher Stelle in der Lagerhalle oder Logistikanlage ein Trommelmotor ein Überlastsignal ausgegeben hat. Hierdurch ist eine Fehleridentifikation wesentlich vereinfacht und der Mitarbeiter erkennt sofort, an welcher Stelle Bedarf für Gegenmaßnahmen besteht. Es ist auch denkbar, diese Informationen über das Internet an den Hersteller des Trommelmotors zu senden, um so besondere Wartungen vornehmen zu können. Für eine drahtlose Kommunikation bietet sich insbesondere eine Kommunikation über den Bluetooth^{®}-Standard an, als auch über ein Drahtlosnetzwerk, wie insbesondere Wifi.

Gemäß einer weiteren bevorzugten Ausführungsform weist die Steuereinheit einen Energiespeicher zum Versorgen des Controllers und/oder der Detektionseinrichtung mit elektrischer Energie auf. Dies ist besonders bevorzugt, wenn die Steuereinheit eine Kommunikationseinheit und der Controller einen Datumszähler aufweist, die auch dann mit elektrischer Energie versorgt werden sollen wenn der Trommelmotor grundsätzlich ausgeschaltet ist. Ein solcher Energiespeicher kann als kapazitiver Speicher ausgebildet sein, oder auch eine aufladbare Batterie umfassen.

Auf dem Display wird vorzugsweise auch das Vorhandensein eines Überlastsignals, oder auch der Kraft, die senkrecht auf die Längsachse des Trommelrohrs wirkt, und an dem Trommelrohr angreift, angezeigt.

Gemäß einem zweiten Aspekt der Erfindung wird die eingangs genannte Aufgabe durch ein System gelöst, welches wenigstens einen Trommelmotor nach einer der vorstehenden Ansprüche aufweist, eine Rollenvorrichtung sowie ein Band, welches den Trommelmotor und die Rollenvorrichtung umschlingt, wobei die Rollenvorrichtung und der Trommelmotor mit ihren Drehachsen im Wesentlichen parallel zueinander angeordnet sind. Die Rollenvorrichtung ist in einer Variante ebenfalls als Trommelmotor ausgebildet, in einer anderen Variante als passive Rollenvorrichtung. Das System kann darüber hinaus mehrere Trommelmotoren sowie mehrere Rollenvorrichtungen, passive oder aktive, aufweisen. Das Band umschlingt die Rollen derart, dass es als Transportband dienen kann, wobei die Achsen im Wesentlichen parallel zueinander angeordnet sind, und vorzugsweise in einer horizontalen Ebene ausgerichtet sind.

Gemäß einem dritten Aspekt wird die eingangs genannte Aufgabe durch ein System gelöst, umfassend wenigstens einen Trommelmotor mit ein Trommelrohr mit einem darin ausgebildeten Hohlraum und einer Längsachse, einem Schaft, der in der Längsachse verläuft und auf dem das Trommelrohr mittels wenigstens eines Drehlagers gelagert ist, eine in dem Hohlraum des Trommelrohrs angeordnete elektrische Antriebseinheit, mit einem Stator und einem Rotor, welche in der Längsachse des Trommelrohrs angeordnet sind und die Antriebseinheit eine Rotationsbewegung des Trommelrohrs relativ zu dem Schaft erzeugt, insbesondere indem der Rotor mit dem Trommelmotor und dem Schaft verbunden ist, und eine Steuereinheit zum Steuern der Antriebseinheit aufweist; umfassend eine Rollenvorrichtung, insbesondere Umlenktrommel, wobei der Trommelmotor und die Rollenvorrichtung mit ihren Drehachsen im Wesentlichen parallel zueinander angeordnet sind, wobei die Rollenvorrichtung ein Rollenrohr mit einem darin ausgebildeten Rollen-Hohlraum und einer Längsachse, und einen Rollen-Schaft, der in der Längsachse verläuft und auf dem das Rollenrohr mittels wenigstens eines Rollen-Drehlagers gelagert ist, aufweist; und umfassend ein Band, welches den Trommelmotor und die Rollenvorrichtung umschlingt; wobei die Steuereinheit einen Frequenzumrichter aufweist und direkt an dem Rollen-Schaft befestigt ist.

In Abweichung zum Trommelmotor gemäß dem ersten Aspekt der Erfindung ist gemäß diesem dritten Aspekt der Erfindung vorgesehen, dass die Steuereinheit nicht auf dem Schaft des Trommelmotors befestigt ist, sondern auf dem Rollen-Schaft der Rollenvorrichtung. Die Rollenvorrichtung ist vorzugsweise als Umlenktrommel ausgebildet, die üblicherweise in einer Förderanlage zum Umlenken des Bandes vorgesehen ist. Solche Umlenktrommeln sind nicht durch einen eigenen Antrieb angetrieben, sondern laufen passiv über das Band mit. Eine Verkabelung der Steuereinheit mit der Antriebseinheit kann dann beispielsweise aus dem Schaft des Trommelmotors heraus, entlang eines Rahmens der Förderanlage, in dem der Trommelmotor und die Rollenvorrichtung angeordnet sind, und dann zu der Steuereinheit geführt werden. Die Verkabelung ist also vollständig gerüstnah bzw. am Gerüst entlang geführt und vor Kollision mit bewegten Objekten weitgehend geschützt.

Die Steuereinheit lässt sich auf diese Weise an einer Rollenvorrichtung positionieren, die für Servicemitarbeiter leicht zugänglich ist, oder die aufgrund ihrer Position klimatisch gut zur Positionierung von sensiblen elektronischen Bauteilen geeignet ist. Ferner kann gemäß diesem Aspekt der Erfindung die Steuereinheit besser und leichter gegen Öl und Flüssigkeit geschützt werden, welche üblicherweise zur Schmierung und Reinigung verwendet werden kann. Dennoch ist sie nah an dem Trommelmotor und eine kurze Kabelführung kann erreicht werden. Es ist nicht erforderlich ein Kabel zu einem entfernt stehenden Schaltschrank oder dergleichen zu führen. Ableitströme und Funkstörungen können weitgehend vermieden werden.

Die Steuereinheit und deren Positionierung bezüglich der Rollenvorrichtung gemäß dem dritten Aspekt der Erfindung weist gleiche und ähnliche Ausführungsformen und Weiterbildungen auf wie die Steuereinheit und deren Positionierung bezüglich des Trommelmotors gemäß dem ersten Aspekt der Erfindung. Diese Ausführungsformen und Weiterbildungen sind insbesondere in den Unteransprüchen niedergelegt. Insofern wird für weitere Merkmale und deren Vorteile auf die obige Beschreibung zum ersten Aspekt der Erfindung vollumfänglich Bezug genommen.

In einer ersten Variante ist die Steuereinheit außerhalb des Rollenrohrs an dem Rollen-Schaft befestigt. Der Rollen-Schaft wird üblicherweise beidseitig vom Rollenrohr in entsprechenden Aufnahmen gehalten, die an einem Gestell oder Rahmen vorgesehen sind. Der Rollen-Schaft kann durchgängig oder mehrteilig sein, das heißt er kann sich als eine Vollachse durch die gesamte Rollenvorrichtung erstrecken, oder der Rollen-Schaft erstreckt sich auf beiden Seiten aus dem Rollenrohr heraus und bildet zwei Achsstummel. Diese Achsstummel erstrecken sich vorzugsweise axial nach außen zu den entsprechenden Aufnahmen an einem Gestell zur Aufnahme der Rollenvorrichtung. Gemäß dieser Variante ist die Steuereinheit an einem derartigen axialen Ende, welches axial äußerlich der entsprechenden Schaftaufnahmen vorsteht, befestigt.

In einer zweiten Variante ist die Steuereinheit innerhalb des Rollen-Hohlraums des Rollenrohrs aufgenommen und an dem Rollen-Schaft befestigt. Hierdurch ist die Kompaktheit der Rollenvorrichtung und somit den Systems insgesamt weiter verbessert. Die Steuereinheit samt Frequenzumrichter ist in dem Rollenrohr aufgenommen, eine Stromversorgung kann mittels eines durch den Rollen-Schaft geführten Kabels erfolgen. Das Kabel kann dann von außerhalb des Gestells durch den Rollen-Schaft bis ins Innere des Rollenrohrs, und dort an die Steuereinheit und den Frequenzumrichter angeschlossen sein. Diese Variante hat den Vorteil, dass die Steuereinheit besonders gut geschützt werden kann. Insbesondere ist es möglich einen Schutz der Steuereinheit bis hin zu IP66 bzw. IP69K zu erzielen.

Gemäß einem vierten Aspekt wird die eingangs genannte Aufgabe durch ein Verfahren zum Betrieb eines Transportsystems mit einem Trommelmotor mit einem Trommelrohr, einer Rollenvorrichtung, wobei der Trommelmotor und die Rollenvorrichtung mit ihren Drehachsen im Wesentlichen parallel angeordnet sind, und einem Band, welches den Trommelmotor und die Rollenvorrichtung umschlingt, mit den Schritten gelöst: Bestimmen einer im Wesentlichen senkrecht auf die Längsachse des Trommelmotors wirkenden und an dem Trommelrohr angreifenden Kraft; Vergleichen, ob die bestimmte Kraft eine vorbestimmte Schwellwertkraft übersteigt, und Ausgeben eines Überlastsignals, wenn die bestimmte Kraft die Schwellwertkraft übersteigt. Vorzugsweise ist das Transportsystem ein System gemäß dem zweiten Aspekt der Erfindung, und/oder der Trommelmotor ist ein Trommelmotor gemäß einer der vorstehend beschriebenen bevorzugten Ausführungsformen eines Trommelmotors gemäß dem ersten Aspekt der Erfindung. Es soll verstanden werden, dass der Trommelmotor gemäß dem ersten Aspekt der Erfindung, das System gemäß dem zweiten Aspekt der Erfindung sowie das Verfahren gemäß dem dritten Aspekt gleiche und ähnliche Ausführungsformen haben, wie sie insbesondere in den Unteransprüchen niedergelegt sind. Insofern wird vollumfänglich auf die obige Beschreibung Bezug genommen.

Das Verfahren umfasst vorzugsweise ferner die Schritte: Empfangen des Überlastsignals an einer Steuereinheit; und Verlangsamen, insbesondere Stoppen, des Trommelmotors, wenn das Überlastsignal empfangen wird.

In einem fünften Aspekt wird die eingangs genannte Aufgabe durch ein Verfahren zum Betreiben eines Transportsystems mit einem Trommelmotor, mit einem Trommelrohr, einer Rollenvorrichtung, wobei der Trommelmotor und die Rollenvorrichtung mit ihren Drehachsen im Wesentlichen parallel zueinander angeordnet sind, und einem Band, welches den Trommelmotor und die Rollenvorrichtung umschlingt, gelöst mit den Schritten: Erfassen der Trommelumdrehungen; und Bestimmen der Anzahl an Trommelumdrehungen bis zum nächsten Service. Dieses Verfahren wird bevorzugt mit einem Trommelmotor mit Synchron-Antriebseinheit oder Asynchron Antriebseinheit ausgeführt. Der Trommelmotor ist daher bevorzugt ein Trommelmotor gemäß dem ersten Aspekt der eingangs beschriebenen Erfindung. Der Frequenzumrichter bei einer Synchron-Antriebseinheit kann als "sensorloser" Encoder verwendet werden und aufgrund der Steuerung des Trommelmotors mittels des Frequenzumrichters ist die Drehzahl bekannt. Ein Service ist fällig nach Erreichen einer bestimmten Schwellwertdrehzahl und aus der bekannten vorbestimmten Schwelldrehzahl sowie der bekannten, erfassten aktuellen Drehzahl, kann eine Restdrehzahl, bis zum nächsten fälligen Service bestimmt werden. Weiterhin umfasst dass Verfahren vorzugsweise die Schritte: Erfassen einer Restdauer bis zum nächsten Service. Dieser Schritt umfasst vorzugsweise ein Zählen der bisherigen Betriebsstunden, sowie ein Bestimmen der durchschnittlichen Betriebsstunden pro Tag und daraus Bestimmen der voraussichtlichen Anzahl an Tagen und Stunden bis zum nächsten fälligen Service, der durch eine Schwellwertbetriebsstundenzahl gekennzeichnet ist. Weiterhin umfasst das Verfahren vorzugsweise den Schritt: Erfassen einer Nennstromaufnahme, einer Windungstemperatur, einer Rotordrehzahl, und einer Selbsterkennung, welcher Nutzungsart der Trommelmotor unterliegt. Vorzugsweise umfasst das Verfahren weiterhin: Nach Erreichen eines Grenzwertes, Abschalten des Motors. Ein Grenzwert kann ein Schwellwert einer der vorgenannten Parameter sein, beispielsweise ein Grenzwert der Windungstemperatur, oder des Motornennstroms. Hierdurch wird die Sicherheit des Trommelmotors weiter verbessert.

Die Erfindung wird anhand der beiliegenden Figuren im Folgenden näher erläutert. Es zeigen:
- Fig. 1: eine perspektivische Seitenansicht eines Trommelmotors gemäß der Erfindung;
- Fig. 2: eine weitere perspektivische Seitenansicht des Trommelmotors aus Fig. 1;
- Fig. 3: eine schematische Seitenansicht des Trommelmotors aus den Fig. 1 und 2;
- Fig. 4: eine Vollschnitt durch einen Trommelmotor gemäß einem zweiten Ausführungsbeispiel;
- Fig. 5: ein Detail und eine Seitenansicht des Trommelmotors aus Fig. 4;
- Fig. 6: eine schematische Draufsicht auf einen Trommelmotor gemäß einem dritten Ausführungsbeispiel;
- Fig. 7: eine schematische Darstellung einer Schaftaufnahme samt Detektionseinrichtung und Kraftmesseinheit;
- Fig. 8a-8c: drei Ansichten der Kraftmesseinheit aus Fig. 7 in drei verschiedenen Zuständen;
- Fig. 9: eine schematische Ansicht eines Systems, wobei die Steuereinheit direkt an dem Rollen-Schaft einer Umlenkrolle befestigt ist; und
- Fig. 10: einen Längsschnitt durch eine Umlenkrolle mit darin angeordneter Steuereinheit.

Ein Trommelmotor 1 gemäß der vorliegenden Erfindung weist ein Trommelrohr 2 auf, welches einen darin ausgebildeten Hohlraum hat. Der Hohlraum ist den Figuren nicht zu sehen, hierzu wird auf den allgemeinen Aufbau von bekannten Trommelmotoren verwiesen. Der Trommelmotor 1 weist ferner eine Längsachse A auf, die gleichzeitig die Längsachse des Trommelrohrs 2 ist und die Drehachse des Trommelmotors darstellt.

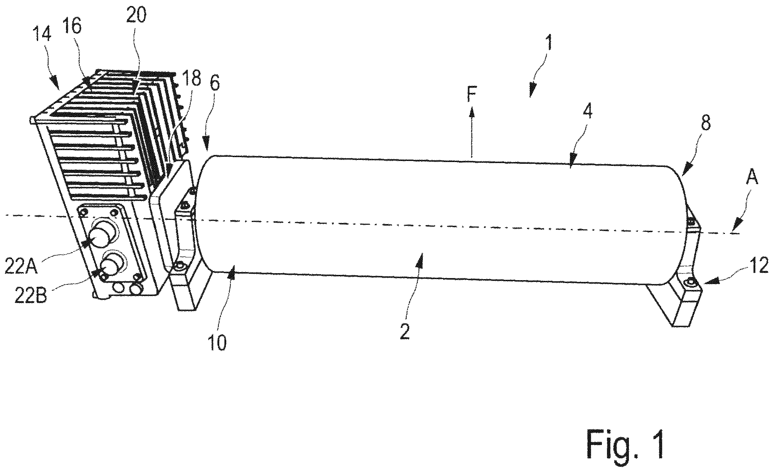

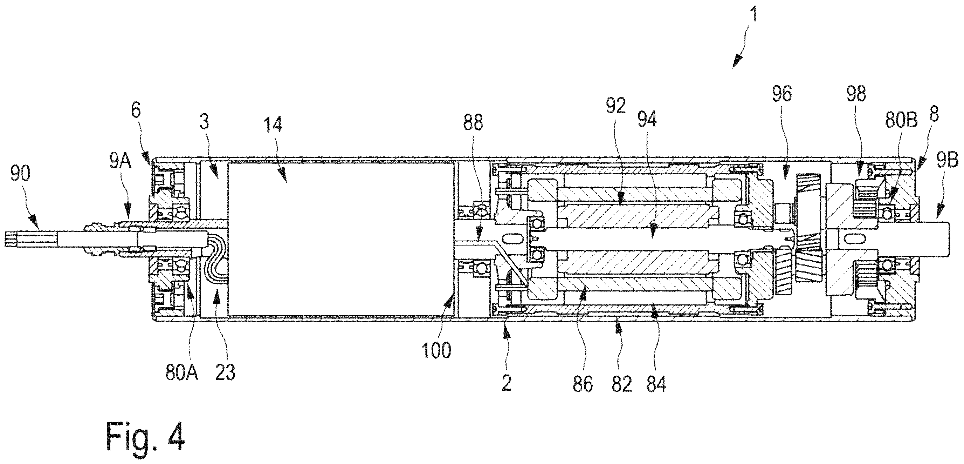

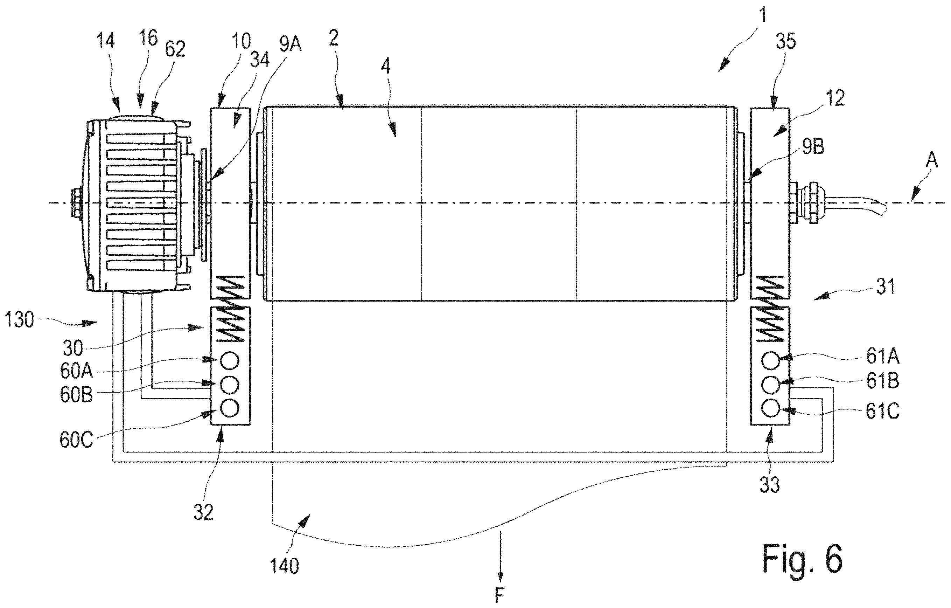

Innerhalb des Trommelrohrs 2 ist eine nicht dargestellte elektrische Synchron-Antriebseinheit untergebracht (vgl. Fig. 4), die einen Stator und einen Rotor aufweist, zum rotierenden Antreiben des Trommelrohrs 2. Das Trommelrohr 2 dient auf seiner Außenfläche 4 zur Aufnahme eines Bandes (vgl. Fig. 6), welches Teil eines Transportsystems ist. Das Band erstreckt sich im montierten Zustand bezogen auf Fig. 1 in etwa in die Zeichenebene hinein.

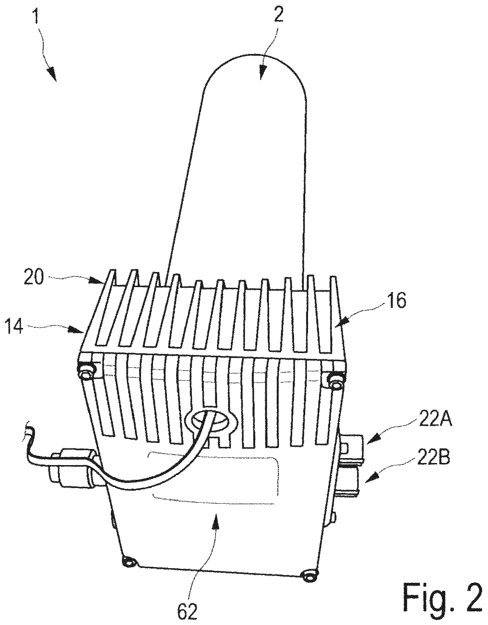

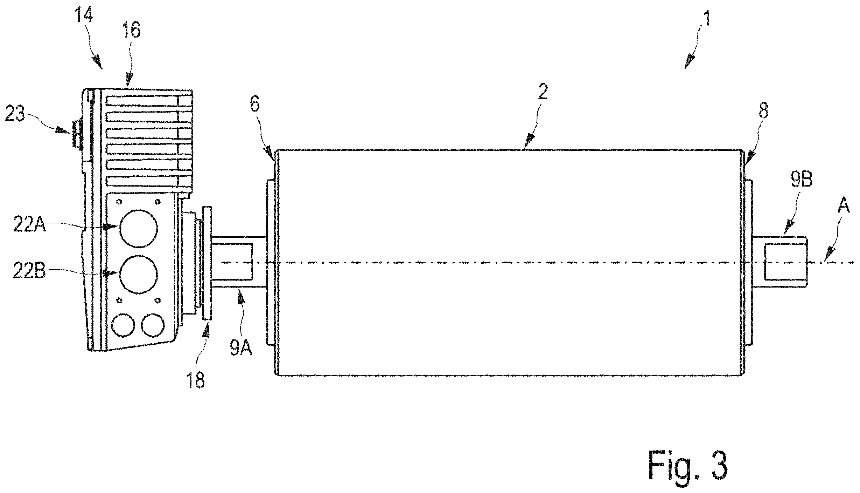

An beiden axialen Enden 6, 8 des Trommelrohrs 2 sind jeweils zwei Schäfte 9A, 9B (in den Figuren 1 und 2 nicht zu sehen; vgl. Fig. 3) vorgesehen. Die beiden Schäfte 9A, 9B dienen als Achsstummel und sind in entsprechenden Schaftaufnahmen 10, 12 drehfest aufgenommen. Die Schaftaufnahmen 10, 12 können hier separat an dem Trommelmotor 1 vorgesehen sein, sie können ebenso Teil eines Maschinengestells sein, welches als Gestell für ein Transportsystem mit einer Mehrzahl an Trommelmotoren 1 und/oder anderen Rollen dient.

In Fig. 1 links neben der Schaftaufnahme 10 und auf der von dem Trommelrohr 2 abgewandten Seite angeordnet ist eine Steuereinheit 14 dargestellt. Genauer gesagt ist das Gehäuse 16 der Steuereinheit 14 zu sehen, welches über eine Zwischenplatte 18 an die Schaftaufnahme 10 angeflanscht ist. Das Gehäuse 16 ist mit einer Mehrzahl an Kühlrippen 20 ausgestattet, um die darin untergebrachte Elektronik zu kühlen. An der in Fig. 1 zum Betrachter hingewandten Seite des Gehäuses 16 sind zwei Bedienknöpfe 22A, 22B vorgesehen, mittels denen sich die Steuereinheit 14 bedienen lässt.

Die Steuereinheit 14 weist im Inneren einen Frequenzumrichter auf, der mit der Synchron oder Asynchron-Antriebseinheit (vgl. Fig. 4) verbunden ist. Mittels des Gehäuses 16 ist der Frequenzumrichter sowie die Steuereinheit 14 direkt und unmittelbar auf den Schaft 9A montiert. Die Zwischenplatte 18 dient als Anschlag für die Schaftaufnahme 10 (vgl. Fig. 1 und 2), welche in Fig. 3 der Übersichtlichkeit halber nicht gezeigt ist. In Fig. 3 lässt sich besonders gut erkennen, wie die beiden Schäfte 9A, 9B aus der Trommel 2 herausragen, sodass der Trommelmotor 1 wie in Fig. 3 dargestellt als eine Baueinheit in einem entsprechenden Gestell aufgenommen werden kann. Mit 23 ist ein Netzanschluss an der Steuereinheit 14 gekennzeichnet. Die Steuereinheit 14 kann direkt an das Wechselstrom- bzw. Drehstromnetz angeschlossen werden, und so kann der Trommelmotor 1 unmittelbar betrieben werden, ohne dass ein Bediener einen zusätzlichen Frequenzumrichter oder dergleichen installieren muss. Die Steuereinheit ist in diesem Ausführungsbeispiel fest und starr mit dem Schaft 9A gekoppelt, sodass der Trommelmotor 1 insgesamt als Baueinheit vormontiert ist.

Der Frequenzumrichter ermöglicht, stufenlos Drehzahlen von nahezu Null bis Nenndrehzahleinzustellen, ohne dass das Drehmoment des Trommelmotors sinkt. Der Trommelmotor kann aber auch oberhalb der Nenndrehfrequenz betrieben werden, dann sinkt das abgegebene Moment jedoch ab, da die Spannung nicht weiter der erhöhten Frequenz angepasst werden kann, es sein denn es wird mit einer erweiterten Hz Kennlinie zur Erweiterung des Spannungsstellbereiches gearbeitet, dann sind auch Drehzahlen mit doppelter Nenndrehzahl bei konstantem Drehmoment möglich, jedoch muss dafür der Trommelmotor mit ausreichender Leistungsreserve ausgelegt werden.

Die Verbindung zwischen Steuereinheit 14 und der Synchron oder Asynchron-Antriebseinheit (vgl. Fig. 4) im Inneren des Trommelrohrs 2 erfolgt über eine Kabelverbindung, die im Inneren des Schafts 9A verläuft (vgl. ebenfalls Fig. 4 entsprechend). Die Steuereinheit 14 weist ferner eine speicherprogrammierbare Steuerung (SPS) auf. Es soll verstanden werden, dass die SPS auch als Controller oder Microcomputer ausgebildet sein kann, allerdings ist eine SPS preiswerter und robuster und wird daher bevorzugt. Mittels der SPS in der Steuereinheit 14 lässt sich die Drehzahl des Rotors der Synchron-Antriebseinheit und darüber auch der Trommel 2, der Nennstrom, sowie die Windungstemperatur erkennen. Die SPS weist gemäß diesem Ausführungsbeispiel auch einen Datumszähler auf. Um den Datumszähler permanent mit einem gewissen Strom zu versorgen, weist die Steuereinheit 14 weiterhin einen Energiespeicher auf, der in diesem Ausführungsbeispiel als Kondensator oder Pufferbaterie/ Akku ausgebildet ist. Dadurch lässt sich die SPS samt Datumszähler auch in einem Zustand, in dem der Trommelmotor 1 nicht an das Netz angeschlossen ist, betreiben.

Der Datumszähler wird dazu eingesetzt, Zeitpunkte, zu denen Überlastungen oder dergleichen, wie Überhitzungen, auftreten, zu speichern. Dazu weist die Steuereinheit 14 ferner einen internen Speicher, beispielsweise einen RAM-Speicher oder EPROM auf, sowie eine Kommunikationseinheit zum Übertragen dieser Informationen per Funk. Die Steuereinheit 14 kann so als "sensorloser" Encoder arbeiten, da kein zusätzlicher Sensor zur Erfassung der Rotation des Trommelrohrs 2 erforderlich ist, sondern diese aus dem Frequenzumrichter ausgelesen werden kann. Auch hierdurch wird die Bauart wesentlich vereinfacht.

In Fig. 4 ist eine Variante zu den Fig. 1 bis 3 dargestellt, die sich im Wesentlichen dadurch unterscheidet, dass die Steuereinheit 14 nicht außerhalb des Trommelrohrs 2 an dem Schaft 9A befestigt ist, sondern innerhalb des Trommelrohrs 2 in einem dafür vorgesehenen Hohlraum 3.

Anhand von Fig. 4 lässt sich auch der allgemeine Aufbau des Trommelmotors 1 erkennen. Auch im ersten Ausführungsbeispiel (Fig. 1 bis 3) ist der Trommelmotor 1 so aufgebaut, mit dem Unterschied, dass die Steuereinheit 14 außerhalb des Trommelrohrs 2 angeordnet ist.

Das Trommelrohr 2 ist mittels Rollenlagern 80A, 80B auf den entsprechenden Schäften 9A, 9B gelagert. Die Synchron-Antriebseinheit 82 ist im Inneren des Trommelrohrs 2 angeordnet und als Innenläufermotor ausgebildet. Das heißt, der radial äußere Stator 84 ist fest mit dem Schaft 9A gekoppelt und weist eine entsprechende Statorwicklung 86 auf. Diese wird mit entsprechendem elektrischen Strom über die Leitung 88 von der Steuereinheit 14 versorgt. Die Steuereinheit 14 ist wiederum über einen Anschluss 90, der durch den Schaft 9A nach außen geführt ist, angeschlossen. Der Rotor 92 weist eine Rotorwelle 94 auf, die in ein Getriebe 96 mündet. Das Getriebe 96 ist abtriebsseitig 98 mit der Trommel 2 verbunden. Hierdurch lässt sich das Trommelrohr 2 antreiben.

Da das Getriebe 96 ölgeschmiert ist, ist innerhalb des Trommelrohrs 2 eine Wandung 100 vorgesehen, um die Steuereinheit 14 zu kapseln. Hierdurch ist die Steuereinheit 14 vor Öl geschützt und gleichzeitig thermisch von der Antriebseinheit entkoppelt.

Der wesentliche Vorteil dieser Ausführungsform (Fig. 4) liegt darin, dass der Trommelmotor 1 insgesamt in seinen Abmaßen einem herkömmlichen Trommelmotor mit Asynchron-Antriebseinheit entspricht und sich somit in bestehende Anlagen auf einfache Art und Weise einbauen lässt. Über den Anschluss 90 kann der Trommelmotor 1 gemäß dieser Ausführungsform direkt mit dem herkömmlichen Netz verbunden werden, da die Steuereinheit 14 einen Frequenzumrichter aufweist und dieser zwischen dem Anschluss 90 und die Synchron-Antriebseinheit 82 geschaltet ist.

In den Ausführungsformen der Fig. 1 bis 3 ist ein Display 62 an dem Gehäuse 16 angeordnet oder man kann über eine Kommunikationsschnittstelle ein externes Display in den Frequenzumrichter einstecken. Auf diesem Display 62 die Anzahl der Umdrehungen des Trommelrohrs 2 bis zum nächsten fälligen Service angezeigt.

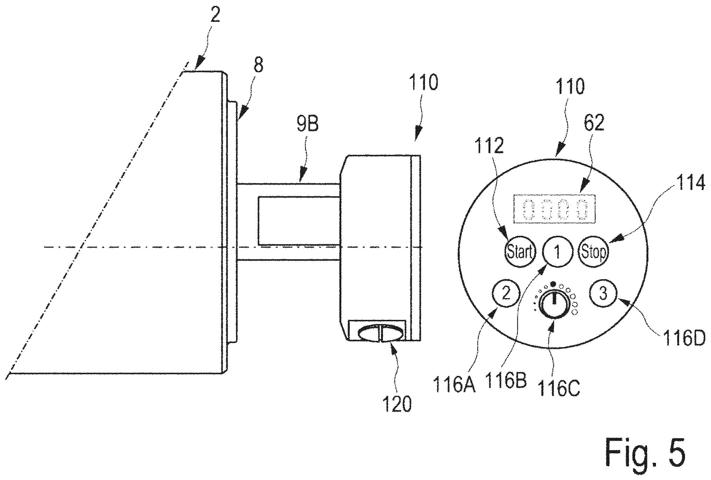

Ein ebensolches Display 62 ist auch bei der Ausführungsform gemäß Fig. 4 bevorzugt. Da die Steuereinheit 14 hierbei aber im Inneren des Trommelrohrs 2 angeordnet ist, weist der Trommelmotor 1 vorzugsweise ein separates Anzeigepaneel 110 auf (vgl. Fig. 5). Das Anzeigepaneel 110 ist beispielsweise an dem zweiten Schaft 9B angeordnet, auch wenn es ebenso möglich ist dieses an dem Schaft 9A anzuordnen.

Das Anzeigepaneel 110 weist gemäß diesem Ausführungsbeispiel das Display 62 sowie einen Startknopf 112, einen Stopknopf 114 und weitere Einstellknöpfe 16A, 16B, 16C, 16D auf. Ferner ist eine Antenne 120 zum senden der Informationen, insbesondere der auf dem Display 62 angezeigten Informationen vorgesehen.

Es ist auch denkbar neben dem Leistungskabel zur Stromversorgung, eine zweite Steuerleitung aus dem Motor zu führen um daran eine Steuereinheit mt Display extern anschließen zu können. Das ist insbesondere dann notwendig, wenn das fest angebaute Gehäuse wie in Fig 5 dargestellt aufgrund beengter oder unzugänglicher räumlicher Gegebenheiten keinen Sinn machen würde.

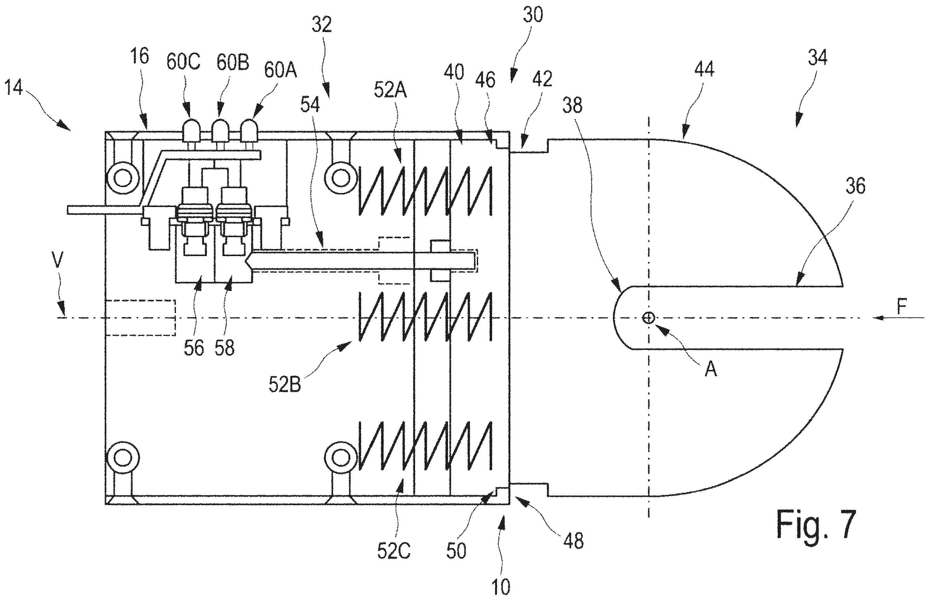

Die Fig. 6 bis 8C illustrieren ein weiteres Ausführungsbeispiel der vorliegenden Erfindung, welches der Einfachheit halber auf dem Ausführungsbeispiel gemäß den Fig. 1 bis 3 basierend dargestellt ist. Wiederum weist der Trommelmotor 1 eine Steuereinheit 14 auf, die außerhalb des Trommelrohrs 2 an dem Schaft 9A befestigt ist. In Fig. 6 ist eine Übersicht dargestellt, während Fig. 7 bis 8d Details zeigen. Gemäß Fig. 6 sind die beiden Schäfte 9A, 9B in entsprechenden Schaftaufnahmen 10, 12 aufgenommen.

Der Trommelmotor 1 ist gemäß diesem Ausführungsbeispiel mit einer Detektionseinrichtung 130 ausgestattet, die gemäß diesem Ausführungsbeispiel innerhalb der Steuereinheit 14 vorgesehen ist. Die Detektionseinrichtung 130 kann aber ebenso als separates Bauteil mit einem separaten Gehäuse ausgestattet sein. Dies ist bevorzugt dann der Fall, wenn der Trommelmotor 1 nicht mit einer Synchron-Antriebseinheit ausgestattet ist, sondern mit einer Asynchron-Antriebseinheit die ohne Frequenzumrichter betrieben wird und daher die Steuereinheit 14 entfallen kann. Auch bei solchen Ausführungsformen ist aber eine Detektionseinrichtung 130 wie nachfolgend beschrieben bevorzugt.

Die Detektionseinrichtung 130 weist zwei Kraftmesseinheiten 30, 31 auf, wobei in anderen Ausführungsformen auch nur eine Kraftmesseinheit 30 vorgesehen sein kann. Mittels der Kraftmesseinheiten 30, 31 ist eine im Wesentlichen senkrecht auf die Längsachse A wirkende und an dem Trommelrohr 2 angreifende Kraft F bestimmbar.

Die Kraft F ist vorzugsweise senkrecht zur Oberfläche 4 des Trommelrohrs 2. Sie steht also senkrecht auf dem Trommelrohr 2. Die Kraft F wird durch ein Band 140 hervorgerufen, welches um das Trommelrohr 2 herumgeführt ist und welches zum Transport von Gütern dient. Aufgrund der Schwerkraft der transportierten Güter wird das Band 140 gestrafft und "zieht" an dem Trommelrohr 2, sodass die Kraft F auf dieses ausgeübt wird.

Es hat sich herausgestellt, dass eine hohe Belastung in diese Richtung zum schnelleren Verschleiß der Drehlager 80A, 80B, zum drehenden Lagern des Trommelrohrs 2 auf dem Schaft 9A, 9B, führt. Um hier rechtzeitig mit einem entsprechenden Service bzw. Wartungsarbeiten oder einem Abschalten des Trommelmotors 1 reagieren zu können, wird gemäß der vorliegenden Erfindung die Kraft F durch die die Kraftmesseinheiten 30, 31 aufweisende Detektionseinrichtung 130 durchgeführt.

In einer nicht dargestellten Variante ist die Detektionseinrichtung 130 analog dem obigen Ausführungsbeispiel der Fig. 4 uns vergleichbar mit der Steuereinheit 14, innerhalb des Trommelrohrs 2 angeordnet. Eine solche Anordnung hat den Vorteil, dass der Bauraum reduziert ist, allerdings kann dies zu Problemen bei Ölleckage führen. Daher ist es in einem solchen Fall bevorzugt, dass die Detektionseinrichtung 130 in einem gekapselten Bereich 3 innerhalb des Trommelrohrs 2 untergebracht ist.

Die Kraftmesseinheit 30, 31, wirkt jeweils mit einem Endabschnitt des Schafts 9A, 9B, der in der Schaftaufnahme 10, 12 aufgenommen ist, zusammen.

Die Kraftmesseinheit 30, 31 weist in dem hier dargestellten Ausführungsbeispiel (Fig. 6 bis 8C) einen feststehenden Teil 32, 33 und einen Schafthalteteil 34, 35 auf. Der Schafthalteteil 34, 35 ist insbesondere aus einem Metallblech gebildet und weist eine längliche Aufnahme 36 (vgl. Fig. 7) auf, in die bis zu einem Anschlag 38 ein Schaft, nämlich der Schaft 9A an dem Ende 6 des Trommelrohrs 2, aufgenommen werden kann. Der Schaft 9A kann in der Aufnahme 36, in Kontakt mit Anschlag 38, fixiert werden, beispielsweise durch eine klemmende Schraubverbindung. Hierzu ist es zweckmäßig, an dem Schaftende, welches sich durch den Schafthalteteil 34 erstreckt, ein Gewinde vorzusehen, sodass der Schaft mit einer entsprechenden Mutter klemmend mit dem Schafthalteteil 34 verbunden ist. In der montierten Lage ist der Schaft so in der Aufnahme 36 angeordnet, dass sich die Längsachse A wie in Fig. 7 eingezeichnet, senkrecht zur Zeichenebene erstreckt.

Der Schafthalteteil 34 weist ein Fußende 40 auf, welches durch einen eingeschnürten Bereich 42 von einem Kopfteil 44 getrennt ist. Das Fußende 40 ist gegenüber dem eingeschnürten Bereich 42 verbreitert, sodass es einen Anschlag 46 bildet. Das Fußende 40 ist verschieblich in dem feststehenden Teil 32 aufgenommen, der an der Öffnung zum Aufnehmen des Schafthalteteils 34 ebenfalls eine Einschnürung 48 besitzt, die einen zum Anschlag 46 korrespondierenden Anschlag 50 bildet. So ist ein Herausrutschen des Schafthalteteils 34 verhindert.

Der Fußteil 40 ist über drei Druckspiralfedern 52A, 52B, 52C mit Bezug auf Fig. 7 in Richtung nach rechts vorgespannt, also in eine Position, in der die Anschläge 46, 50 miteinander in Anlage sind. Diese Position wird auch als Ruheposition bezeichnet. Der Schafthalteteil 34 und somit auch der Schaft und folglich auch das Trommelrohr 2 nehmen diese Position in einem lastlosen Zustand ein.

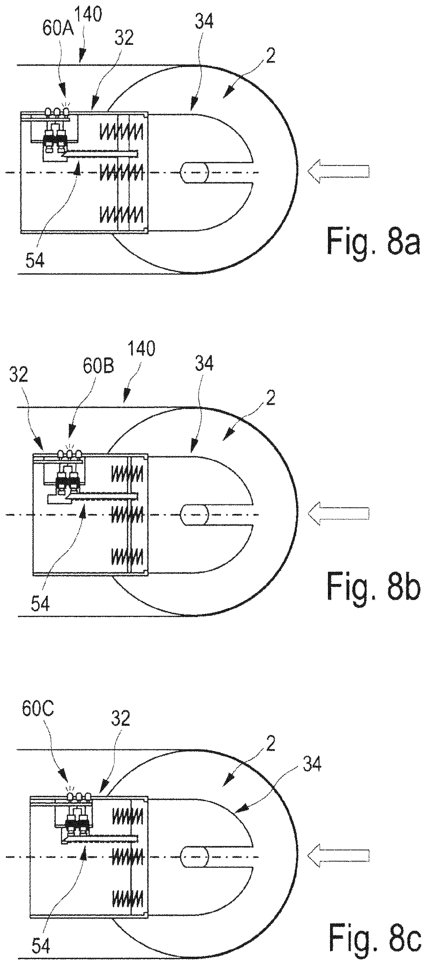

An dem Fußteil 40 des Schafthalteteils 34 ist ein Sensorbetätigungsglied 54 angeordnet, welches sich langgestreckt in Richtung der Verschiebungsachse V erstreckt. Benachbart zu dem Sensorbetätigungsglied 54 sind gemäß dieser Ausführungsform ein erster und ein zweiter Kontaktschalter 56, 58 seitlich angeordnet. Wird nun die Kraft F auf das Trommelrohr 2 ausgeübt und überträgt sich über den Schaft und auf das Schafthalteteil 34, wird das Schafthalteteil 34 mit Bezug auf Fig. 7 gegen die Kraft der Federn 52A, 52B, 52C nach links verschoben (vgl. Fig. 8A, 8B, 8C). Da der Weg des Verschiebens des Schafthalteteils 34, also des Eintauchens des Fußteils 40 in den feststehenden Teil 32, proportional zur Kraft F ist, kann durch den Abstand zwischen den Kontaktschaltern 56, 58 und dem Sensorbetätigungsglied 54 eine Kraft F vorbestimmt werden, zu der das Sensorbetätigungsglied 54 in Kontakt mit dem jeweiligen Kontaktschalter 56, 58 kommt.

Genauer kommt in dieser Ausführungsform beim Aufbringen einer Kraft F das Sensorbetätigungsglied 54 zunächst in Kontakt mit dem zweiten Kontaktschalter 58 und anschließend bei weiterem Erhöhen der Kraft F mit dem ersten Kontaktschalter 56. Wird der erste Kontaktschalter 56 betätigt, wird ein Überlastsignal ausgegeben. Der zweite Kontaktschalter 58 dient als Vorwarnstufe, dass bereits eine hohe Kraft erreicht wurde. Ein Überlastsignal wird hier nicht ausgegeben, sondern nur ein Vorlastsignal. Das Überlastsignal wird an die Steuereinheit 14 ausgegeben, und der Trommelmotor 1 wird angehalten.

In diesem einfachen Fall mit den mechanisch betätigten Kontaktschaltern 56, 58 dient die Verbindung des Kontaktschalters der Steuereinheit 14 als oben beschriebene Auswerteeinheit, die dazu eingerichtet ist, auf Basis von dem vom Kontaktschalter 56, 58 empfangenen Signal die Kraft zu bestimmen und wenn diese bestimmte Kraft den vorgegebenen Schwellwert übersteigt, das Überlastsignal abzugeben.

Wie sich weiterhin aus den Fig. 6 bis 8C ergibt sind an dem feststehenden Teil 32, 33 jeweils drei LEDs 60A, 60B, 60C, 61A, 61B, 61C vorgesehen. Die LED 60A, 61A ist grün, LED 60B, 61B ist gelb und LED 60C, 61C ist rot. Diese drei LEDs 60A, 60B, 60C, 61A, 61B, 61C zeigen über ein Ampelsystem die Belastung des Trommelmotors 1 an. Im Ruhezustand leuchtet die LED 60A, 61A (vgl. Fig. 8A), und durch das Anzeigen des grünen Lichts wird ein Bediener darüber informiert, dass die Kraft F in einem akzeptablen Bereich ist. In diesem Zustand hat das Sensorbetätigungsglied 54 den Kontaktschalter 58 noch nicht erreicht oder noch nicht vollständig heruntergedrückt. Wird nun die Kraft F erhöht, taucht der Fußteil 40 weiter in den feststehenden Teil 32 ein, und das Sensorbetätigungsglied 54 kommt in Kontakt mit dem zweiten Kontaktschalter 58. Wird dieser ausreichend betätigt, leuchtet die gelbe Kontaktleuchte 60B, 61B auf (vgl. Fig. 8B). Die grüne Kontaktleuchte 60A erlischt gleichzeitig. Ein Bediener kann also erkennen, dass die Kraft F nun einen Vorlastbereich erreicht hat, der zwar noch nicht kritisch ist, allerdings ist die Kraft F in diesem Zustand bereits nah an der Schwellwertkraft, und der Trommelmotor 1 wird erhöht belastet.

Steigt die Belastung nun weiter an und die Kraft F nimmt dementsprechend zu, taucht der Fußteil 40 weiter gegen die Kraft der Federn 52A, 52B, 52C ein, und das Sensorbetätigungsglied 54 kommt in Kontakt mit dem ersten Kontaktschalter 56. Wird dieser gedrückt, leuchtet die rote LED 60C, 61C auf (vgl. Fig. 8C). Die gelbe LED 60B, 61B erlischt. Ein Bediener kann hier an dem roten Licht erkennen, dass es sich um eine Warnung handelt und nunmehr die vorbestimmte Schwellwertkraft erreicht wurde. Gleichzeitig wird auch das Überlastsignal ausgegeben, und der Trommelmotor 1 wird verlangsamt, insbesondere angehalten. Durch das Anhalten des Trommelmotors wird verhindert, dass sich der Trommelmotor 1 unter einer Überlast weiter bewegt, und somit wird ein Defekt des Trommelmotors 1 verhindert.

Es lässt sich leicht erkennen, dass die Kontaktschalter 56, 58 auch durch einen anderen Sensor ersetzt werden können, wie insbesondere einen Encoder. In einem solchen Fall wäre anstelle der zwei Kontaktschalter 56, 58 ein einzelner Encoder vorzusehen und an dem Sensorbetätigungsglied 54 ein Maßstab. Der Encoder würde in diesem Fall den Maßstab auf dem Sensorbetätigungsglied 54 abtasten und bei Erreichen eines bestimmten Zählstands, der dann einem vorbestimmten Eintauchen des Fußabschnitts 40 entspricht, ein korrespondierendes Signal abgeben.

Der Maßstab auf dem Sensorbetätigungsglied 54 kann in einem solchen Fall in beliebiger Weise ausgebildet sein, insbesondere optisch, magnetisch oder mechanisch abtastbar. Entsprechende optische, magnetische oder mechanische Encoder sind bekannt und verfügbar.

Als weitere Möglichkeit besteht auch die Variante, anstelle der Kontaktschalter 56, 58 ein Potentiometer vorzusehen. In diesem Fall würde an dem Sensorbetätigungsglied 54 beispielsweise eine Zahnstange und an dem Potentiometer ein entsprechendes Ritzel vorgesehen sein. Alternativ könnte das Sensorbetätigungsglied 54 als Tauch-Eisenkern ausgebildet sein, der in eine entsprechende Tauch-Spule eintaucht. Auch hierdurch lässt sich ein Eintauchen des Fußabschnitts 40 in den feststehenden Teil 32 und so ein Verschieben des Schafts gegen die Kraft der Federn 52A, 52B, 52C erfassen und bei entsprechendem Überschreiten einer Schwellwertkraft ein Überlastsignal ausgeben.

Neben den drei LEDs 60A, 60B, 60C, 61A, 61B, 61C ist in der dargestellten Ausführungsform (vgl. Fig. 6) an dem Gehäuse 16 der Steuereinheit 14 das Display 62 angeordnet. Auf diesem Display 62 wird vorzugsweise die Kraft F, die aktuell auf das Trommelrohr 2 wirkt, angezeigt, wenn anstelle der Kontaktschalter 56, 58 ein Encoder oder dergleichen, ein Sensor, der eine kontinuierliche Kraftmessung erlaubt, angeordnet ist. Zusätzlich wird auf dem Display 62 die Anzahl der Umdrehungen des Trommelrohrs 2 bis zum nächsten fälligen Service angezeigt. Dazu bestimmt die Steuereinheit 14 basierend auf den üblichen Serviceintervallen und der erfassten Belastung des Trommelmotors 1, insbesondere der Anzahl der ausgegebenen Überlastsignale, das nächste fällige Serviceintervall. So ist beispielsweise beim Erfassen von einem ersten Überlastsignal denkbar, die Anzahl der Umdrehungen bis zum nächsten Serviceintervall um 5 % zu reduzieren. Entsprechende Staffelungen können hier vorgesehen sein.

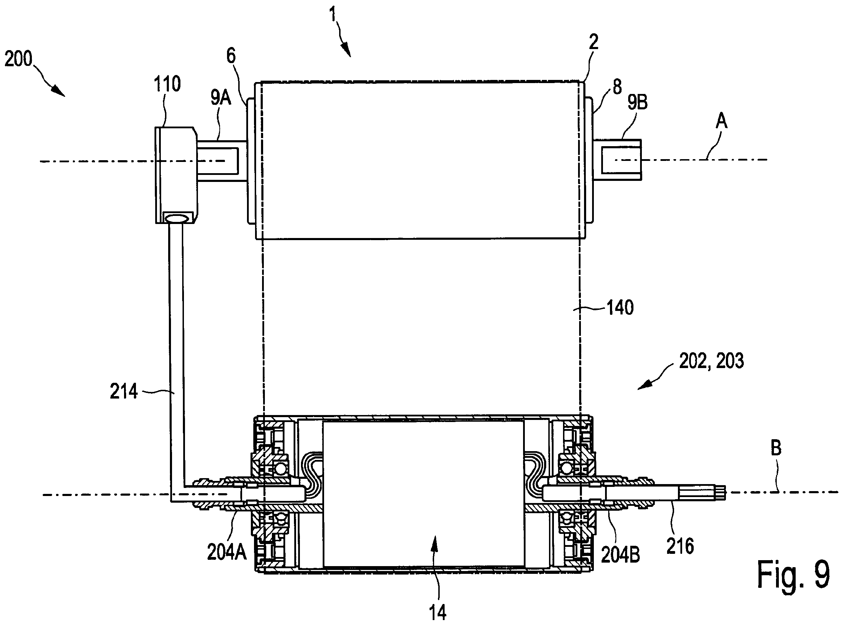

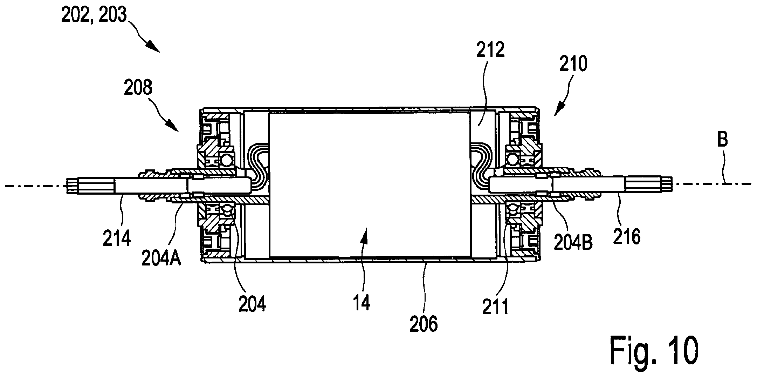

Die Fig. 9 und 10 illustrieren nun ein System umfassend wenigstens einen Trommelmotor 1 sowie eine Rollenvorrichtung 202. Gleiche und ähnliche Elemente sind mit gleichen Bezugszeichen wie in den ersten Ausführungsbeispielen versehen. Insofern wird vollumfänglich auf die obige Beschreibung Bezug genommen.

In Abweichung zu dem ersten Ausführungsbeispiel des Trommelmotors 1 (vgl. Fig. 1 bis 5) ist in diesem konkreten Ausführungsbeispiel des Systems 200 (Fig. 9 und 10) die Steuereinheit 14 nicht direkt auf dem Schaft 9A, 9B des Trommelmotors 1 angeordnet, sondern ist direkt an einem Rollen-Schaft 204A, 204B der Rollenvorrichtung 202 befestigt.

Die Rollenvorrichtung 202 ist in diesem Ausführungsbeispiel als Umlenkrolle 203 ausgebildet und im Detail in Fig. 10 gezeigt. Die Umlenkrolle 203 weist ein Rollenrohr 206 auf, auf dessen radial äußerer Oberfläche das Band 140 läuft. Das Rollenrohr 206 ist über einen ersten Lagerdeckel 208 und einen zweiten Lagerdeckel 210 drehbar auf dem Rollen-Schaft 204A, 204B gelagert, welcher drehfest in einem Gestell aufnehmbar ist. Dazu ist an dem ersten Lagerdeckel 208 erstes Rollen-Drehlager 209 und an dem zweiten Lagerdeckel 210 ein zweites Rollen-Drehlager 211 vorgesehen. Konkret ist der Rollen-Schaft 204A, 204B hier geteilt und als zwei Achstummel ausgebildet, die entlang der Zentralachse B durch die ersten und zweiten Lagerdeckel 208, 210 verlaufen. Insofern sind derartige Rollenvorrichtungen 202 und insbesondere Umlenktrommeln 203 bekannt und werden häufig eingesetzt.

Aufgrund der Lagerdeckel 208, 210 ist ein innerer Rollen-Hohlraum 212 gut gegen die Umgebung abgedichtet. Rollenvorrichtungen 202 und insbesondere Umlenktrommeln 203 sind nicht angetrieben, und der Hohlraum 212 ist im Betrieb lediglich mit Luft gefüllt.

In dieser Ausführungsform wird der Rollen-Hohlraum 212 genutzt, um darin die Steuereinheit 14 samt Frequenzumrichter unterzubringen.

In anderen Ausführungsbeispielen ist vorgesehen, dass die Steuereinheit 14 außerhalb des Rollenrohrs 206 auf dem Rollen-Schaft 204A, 204B befestigt ist, wie dies oben mit Bezug auf den Trommelmotor 1 bereits beschrieben wurde.

Dadurch, dass die Steuereinheit 14 im Rollen-Hohlraum 212 angeordnet ist, ist diese besonders gut vor Umwelteinflüssen geschützt, und insbesondere ist es möglich, einen Schutz gemäß der Klasse IP66 bzw. IP69K zu erzielen.

In diesem Ausführungsbeispiel sind sowohl der erste Achsstummel 204A als auch der zweite Achsstummel 204B hohl ausgeführt, sodass eine erste elektrische Leitung 214 durch den ersten Achsstummel 204A zur Steuereinheit 14 verläuft. Diese erste elektrische Leitung verbindet die Steuereinheit 14 mit dem Trommelmotor 1, in dem in Fig. 9 gezeigten Ausführungsbeispiel konkret mit dem Anzeigepaneel 110, welches seinerseits über den Achsstummel 9A mit der Antriebseinheit 82 des Trommelmotors 1 gekoppelt ist. Durch den zweiten Rollen-Achsstummel 204B verläuft ein zweites elektrisches Kabel 216, welches dazu dient, die Steuereinheit 14 mit elektrischem Strom zu versorgen. Die Steuereinheit 14, die einen Frequenzumrichter aufweist, wandelt dann die zugeführte Energie, um die Antriebseinheit 82 entsprechend anzutreiben, und stellt diese über die erste elektrische Leitung 214 bereit.

Die erste elektrische Leitung 214 verläuft vorzugsweise entlang eines Gestells oder Gerüsts, an dem sowohl der Trommelmotor 1 als auch die Rollenvorrichtung 202 mittels der entsprechenden Schafte bzw. Schaftanschnitte 9A, 9B, 204A, 204B aufgenommen sind.

Insofern soll verstanden werden, dass die Steuereinheit 14 ebenfalls drehfest ist und sich im Betrieb lediglich das Rollenrohr 206 dreht.

Durch dieses System 200 sind die Vorteile des ersten Ausführungsbeispiels weitergebildet. Durch das Anzeigepaneel 110, welches am Trommelmotor 1 angeordnet ist, kann der Bediener immer noch direkt am Trommelmotor entsprechende Werte ablesen und Einstellungen vornehmen. Die Steuereinheit 14 ist allerdings entfernt von dem Trommelmotor 1, aber immer noch in dessen räumlicher Nähe angeordnet, insbesondere am gleichen Gerüst. Die Steuereinheit ist dabei vor äußeren Einflüssen gut geschützt, und der Rollen-Hohlraum 212 sinnvoll genutzt.

## Patentansprüche

1. Trommelmotor (1), umfassend
- ein Trommelrohr (2) mit einem darin ausgebildeten Hohlraum (3) und einer Längsachse (A),
- einen Schaft (9A, 9B), der in der Längsachse (A) verläuft und auf dem das Trommelrohr (2) mittels wenigstens eines Drehlagers (80A, 80B) gelagert ist,
- eine in dem Hohlraum (3) des Trommelrohrs (2) angeordnete elektrische Antriebseinheit (82), mit einem Stator (84) und einem Rotor (92), welche in der Längsachse (A) des Trommelrohrs (2) angeordnet sind und wobei der Rotor (92) mit dem Trommelrohr (2) und der Stator (84) mit dem Schaft (9A, 9B) verbunden ist, und
- eine Steuereinheit (14) zum Steuern der Antriebseinheit (82), **dadurch gekennzeichnet, dass** die Steuereinheit (14) einen Frequenzumrichter aufweist und wobei Steuereinheit (14) mit Frequenzumrichter außerhalb des Trommelrohrs (2) direkt an dem Schaft (9A, 9B) befestigt ist.

2. Trommelmotor (1) nach Anspruch 1,
**dadurch gekennzeichnet, dass** die elektrische Antriebseinheit (82) eine Synchron-Antriebseinheit und die Steuereinheit (14) zum Steuern der Synchron-Antriebseinheit parametrisiert ist.

3. Trommelmotor nach einem der vorstehenden Ansprüche, wobei die Steuereinheit (14) einen Controller, insbesondere eine speicherprogrammierbare Steuerung (SPS) aufweist, zum Erfassen von Betriebsdaten des Trommelmotors (1).

4. Trommelmotor nach Anspruch 3, wobei der Controller ferner dazu eingerichtet ist wenigstens einen der folgenden Parameter zu bestimmen: Drehzahl des Rotors (92), Temperatur von Motorwindungen (86), Nennstromaufnahme, Trommelumdrehungen bis zum nächsten fälligen Service, Restlaufzeit bis zum nächsten fälligen Service.

5. Trommelmotor nach einem der vorstehenden Ansprüche, wobei die Steuereinheit (14) eine Kommunikationseinheit zum drahtlosen oder drahtgebundenen Übertragen von wenigstens einem Signal aufweist.

6. Trommelmotor nach einem der vorstehenden Ansprüche, wobei die Steuereinheit (14) ein Display (62) zum Anzeigen von wenigstens einer den Trommelmotor (1) betreffenden Information aufweist.

7. Trommelmotor nach einem der vorstehenden Ansprüche, **gekennzeichnet durch** eine Detektionseinrichtung (130) mit einer Kraftmesseinheit (30, 31) zum Bestimmen einer im Wesentlichen senkrecht auf die Längsachse (A) wirkenden und an dem Trommelrohr (2) angreifenden Kraft (F).

8. Trommelmotor nach einem der vorstehenden Ansprüche, wobei die Steuereinheit (14) einen Energiespeicher zum Versorgen des Controllers und/oder der Detektionseinrichtung (130) mit elektrischer Energie aufweist.

9. System, umfassend
wenigstens einen Trommelmotor (1) nach einem der vorstehenden Ansprüche, eine Rollenvorrichtung (202, 203),
und ein Band (140), welches den Trommelmotor und die Rollenvorrichtung umschlingt,
wobei der Trommelmotor (1) und die Rollenvorrichtung (8) mit ihren Drehachsen (A, B) im Wesentlichen parallel zueinander angeordnet sind.

## Claims

1. Drum motor (1), comprising
- a drum tube (2) with a cavity (3) formed therein and a longitudinal axis (A),
- a shaft (9A, 9B), which extends in the longitudinal axis (A) and on which the drum tube (2) is mounted by means of at least one rotary bearing (80A, 80B),
- an electric drive unit (82) arranged in the cavity (3) of the drum tube (2), comprising a stator (84) and a rotor (92), which are arranged in the longitudinal axis (A) of the drum tube (2), and wherein the rotor (92) is connected to the drum tube (2) and the stator (84) is connected to the shaft (9A, 9B), and
- a control unit (14) for controlling the drive unit (82),
**characterized**
**in that** the control unit (14) has a frequency converter, and wherein the control unit (14) with the frequency converter is fixed directly to the shaft (9A, 9B) outside the drum tube (2).

2. Drum motor (1) according to Claim 1,
**characterized in that** the electric drive unit (82) is a synchronous drive unit, and the control unit (14) for controlling the synchronous drive unit is parameterized.

3. Drum motor according to one of the preceding claims, wherein the control unit (14) has a controller, in particular a programmable logic controller (PLC), for acquiring operating data of the drum motor (1).

4. Drum motor according to Claim 3, wherein the controller is further configured to determine at least one of the following parameters: rotational speed of the rotor (92), temperature of motor windings (86), rated current consumption, drum revolutions until the next due service, remaining running time until the next due service.

5. Drum motor according to one of the preceding claims, wherein the control unit (14) has a communication unit for the wire-free or wired transmission of at least one signal.

6. Drum motor according to one of the preceding claims, wherein the control unit (14) has a display (62) for displaying at least one item of information relating to the drum motor (1).

7. Drum motor according to one of the preceding claims, **characterized by** a detection device (130) having a force measurement unit (30, 31) for determining a force (F) acting substantially perpendicularly on the longitudinal axis (A) and on the drum tube (2).

8. Drum motor according to one of the preceding claims, wherein the control unit (14) has an energy store for supplying the controller and/or the detection device (130) with electrical energy.

9. System, comprising
at least one drum motor (1) according to one of the preceding claims,
a roller apparatus (202, 203),
and a belt (140), which wraps around the drum motor and the roller apparatus,
wherein the drum motor (1) and the roller apparatus (8) are arranged with their axes of rotation (A, B) substantially parallel to each other.

## Revendications

1. Moteur à tambour (1), comprenant
- un tube de tambour (2) avec une cavité (3) formée à l'intérieur et un axe longitudinal (A),
- un arbre (9A, 9B), qui s'étend dans l'axe longitudinal (A) et sur lequel le tube de tambour (2) est monté au moyen d'au moins un palier rotatif (80A, 80B),
- une unité d'entraînement électrique (82) agencée dans la cavité (3) du tube de tambour (2), avec un stator (84) et un rotor (92) qui sont agencés dans l'axe longitudinal (A) du tube de tambour (2), le rotor (92) étant relié au tube de tambour (2) et le stator (84) à l'arbre (9A, 9B), et
- une unité de commande (14) pour commander l'unité d'entraînement (82),
**caractérisé en ce que**
l'unité de commande (14) présente un convertisseur de fréquence, l'unité de commande (14) avec le convertisseur de fréquence étant fixée directement à l'arbre (9A, 9B) à l'extérieur du tube de tambour (2).

2. Moteur à tambour (1) selon la revendication 1, **caractérisé en ce que** l'unité d'entraînement électrique (82) est une unité d'entraînement synchrone et l'unité de commande (14) est paramétrée pour commander l'unité d'entraînement synchrone.

3. Moteur à tambour selon l'une quelconque des revendications précédentes, l'unité de commande (14) présentant un contrôleur, notamment un automate programmable industriel (API), pour l'acquisition de données de fonctionnement du moteur à tambour (1).

4. Moteur à tambour selon la revendication 3, le contrôleur étant en outre adapté pour déterminer au moins l'un des paramètres suivants : la vitesse de rotation du rotor (92), la température des enroulements du moteur (86), la consommation de courant nominale, le nombre de tours du tambour jusqu'à la prochaine maintenance due, le temps de fonctionnement restant jusqu'à la prochaine maintenance due.

5. Moteur à tambour selon l'une quelconque des revendications précédentes, l'unité de commande (14) présentant une unité de communication pour la transmission sans fil ou avec fil d'au moins un signal.

6. Moteur à tambour selon l'une quelconque des revendications précédentes, l'unité de commande (14) présentant un écran (62) pour afficher au moins une information concernant le moteur à tambour (1).

7. Moteur à tambour selon l'une quelconque des revendications précédentes, **caractérisé par** un appareil de détection (130) comprenant une unité de mesure de force (30, 31) pour déterminer une force (F) agissant essentiellement perpendiculairement à l'axe longitudinal (A) et s'appliquant au tube de tambour (2).

8. Moteur à tambour selon l'une quelconque des revendications précédentes, l'unité de commande (14) présentant un accumulateur d'énergie pour alimenter le contrôleur et/ou l'appareil de détection (130) en énergie électrique.

9. Système, comprenant
au moins un moteur à tambour (1) selon l'une quelconque des revendications précédentes,
un dispositif à rouleaux (202, 203),
et une bande (140) qui s'enroule autour du moteur à tambour et du dispositif à rouleaux,
le moteur à tambour (1) et le dispositif à rouleaux (8) étant agencés avec leurs axes de rotation (A, B) essentiellement parallèles l'un à l'autre.
